# EUROPÄISCHE PATENTSCHRIFT

(11) **EP 1 678 430 B1**
(45) Veröffentlichungstag und Bekanntmachung des Hinweises auf die Patenterteilung: **28.11.2007**
(21) Anmeldenummer: 04790096.4
(22) Anmeldetag: 02.10.2004
(51) Int. Cl.: F16H 3/66, F16D 25/10, F16H 63/30

(54) **MEHRSTUFEN-AUTOMATGETRIEBE MIT DREI PLANETENRADSÄTZEN**
MULTISTEP AUTOMATIC TRANSMISSION WITH THREE PLANETARY GEAR TRAINS
BOITE DE VITESSES AUTOMATIQUE MULTI-ETAGE COMPORTANT TROIS TRAINS PLANETAIRES

(30) Priorität: 30.10.2003 DE 10350761
(43) Veröffentlichungstag der Anmeldung: 12.07.2006
(73) Patentinhaber: ZF FRIEDRICHSHAFEN Aktiengesellschaft, 88038 Friedrichshafen (DE)
(72) Erfinder: TIESLER, Peter, 88074 Meckenbeuren (DE); GIERLING, Armin, 88085 Langenargen (DE); ZIEMER, Peter, 88069 Tettnang (DE)
(86) Internationale Anmeldenummer: PCT/EP2004/011031
(87) Internationale Veröffentlichungsnummer: WO 2005/047733

(56) Entgegenhaltungen:
- EP-A- 1 265 006
- DE-A1- 19 912 480
- US-B1- 6 609 439

## Beschreibung

Die vorliegende Erfindung betrifft ein Mehrstufen-Automatgetriebe mit mindestens drei Einzel-Planetenradsätzen und mindestens fünf Schaltelementen, nach dem Oberbegriff des Patentanspruchs 1.

Automatgetriebe mit mehreren, ohne Gruppenschaltung schaltbaren Gängen sind vielfältig bekannt. Aus der DE 199 12 480 A1 beispielsweise ist ein gattungsgemäßes Automatgetriebe mit drei Einsteg-Planetenradsätzen sowie drei Bremsen und zwei Kupplungen zum Schalten von sechs Vorwärtsgängen und einem Rückwärtsgang bekannt, das für Kraftfahrzeuge sehr gut geeignete Übersetzungen mit einer hohen Gesamtspreizung und günstigen Stufensprüngen sowie einer hohen Anfahrübersetzung in Vorwärtsrichtung aufweist. Die einzelnen Gänge werden durch selektives Schließen von jeweils zwei der sechs Schaltelemente erzielt, sodaß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

Dabei ist eine Antriebswelle des Automatgetriebes ständig mit einem Sonnenrad des zweiten Planetenradsatzes verbunden. Weiterhin ist die Antriebswelle über die erste Kupplung mit einem Sonnenrad des ersten Planetenradsatzes und/oder über die zweite Kupplung mit einem Steg des ersten Planetenradsatzes verbindbar. Zusätzlich oder alternativ ist das Sonnenrad des ersten Planetenradsatzes über die erste Bremse mit einem Gehäuse des Automatgetriebes und/oder der Steg des ersten Planetenradsatzes über die zweite Bremse mit dem Gehäuse und/oder ein Sonnenrad des dritten Planetenradsatzes über die dritte Bremse mit dem Gehäuse verbindbar.

Für die kinematische Kopplung der einzelnen Planetenradsätze miteinander offenbart die DE 199 12 480 A1 zwei verschiedene Versionen. In der ersten Version ist vorgesehen, daß eine Abtriebswelle des Automatgetriebes ständig mit einem Steg des dritten Planetenradsatzes und einem Hohlrad des ersten Planetenradsatzes verbunden ist, und daß der Steg des ersten Planetenradsatzes ständig mit einem Hohlrad des zweiten Planetenradsatzes und ein Steg des zweiten Planetenradsatzes ständig mit einem Hohlrad des dritten Planetenradsatzes verbunden ist. Die Antriebs- und die Abtriebswelle können dabei sowohl koaxial zueinander auf gegenüberliegenden Seiten des Getriebegehäuses angeordnet sein, als auch achsparallel auf derselben Seite des Getriebegehäuses. In der zweiten Version ist vorgesehen, daß die Abtriebswelle ständig mit dem Steg des zweiten Planetenradsatzes und dem Hohlrad des ersten Planetenradsatzes verbunden ist, daß der Steg des ersten Planetenradsatzes ständig mit dem Hohlrad des dritten Planetenradsatzes verbunden ist, und daß das Hohlrad des zweiten Planetenradsatzes ständig mit dem Steg des dritten Planetenradsatzes verbunden ist. Eine derartige Ausbildung ist besonders für eine koaxiale Anordnung von An- und Abtriebswellen geeignet.

Hinsichtlich der räumlichen Anordnung der Planetenradsätze schlägt die DE 199 12 480 A1 vor, die drei Planetenradsätze koaxial in Reihe nebeneinander anzuordnen, wobei der zweite Planetenradsatz axial zwischen dem ersten und dritten Planetenradsatz angeordnet ist. Hinsichtlich der räumlichen Anordnung der einzelnen Schaltelemente relativ zu einander und relativ zu den Planetenradsätzen schlägt die DE 199 12 480 A1 vor, die erste und zweite Bremse stets unmittelbar nebeneinander anzuordnen, wobei die zweite Bremse stets unmittelbar axial an den ersten Planetenradsatz angrenzt, und die dritte Bremse stets auf der dem ersten Planetenradsatzes abgewandten Seite der dritten Planetenradsatzes anzuordnen, sowie die beiden Kupplungen stets unmittelbar nebeneinander anzuordnen. In einer ersten Anordnungsvariante sind beide Kupplungen auf der dem dritten Planetenradsatz abgewandten Seite des ersten Planetenradsatzes angeordnet, wobei die erste Kupplung axial unmittelbar an die erste Bremse angrenzt und näher am ersten Planetenradsatz angeordnet ist als die zweite Kupplung. In Verbindung mit einer nicht koaxialen Lage von Antriebs- und Abtriebswelle wird in einer zweiten Anordnungsvariante vorgeschlagen, daß beide Kupplungen auf der dem ersten Planetenradsatz abgewandten Seite des dritten Planetenradsatzes angeordnet sind, wobei die zweite Kupplung näher am dritten Planetenradsatz angeordnet ist als die erste Kupplung und axial an ein mit der Abtriebswelle wirkverbundenes Abtriebsstirnrad angrenzt, welches wiederum auf der dem dritten Planetenradsatz abgewandten Seite der dritten Bremse angeordnet ist.

Der vorliegenden Erfindung liegt die Aufgabe zugrunde, für das aus dem Stand der Technik der DE 199 12 480 A1 bekannte Automatgetriebe alternative Bauteilanordnungen darzustellen, mit möglichst kompaktem Getriebeaufbau. Vorzugsweise soll das Automatgetriebe in einem Kraftfahrzeug mit nicht koaxialer Getriebeantriebs- und Getriebeabtriebswelle Anwendung finden können, durch vergleichsweise einfache Modifikationen möglichst aber auch in einem Kraftfahrzeug mit Standard-Antrieb und koaxialer Anordnung von Getriebeantriebs- und Getriebeabtriebswelle einsetzbar sein.

Erfindungsgemäß gelöst wird die Aufgabe durch ein Mehrstufen-Automatgetriebe mit den Merkmalen des Patentanspruchs 1. Vorteilhafte Ausgestaltungen und Weiterbildungen der Erfindung ergeben sich aus den Unteransprüchen.

Ausgehend vom gattungsgemäßen Stand der Technik der DE 199 12 480 A1, weist das erfindungsgemäße Mehrstufen-Automatgetriebe mindestens drei gekoppelte Einzel-Planetenradsätze auf, die koaxial zueinander angeordnet sind, wobei der zweite Planetenradsatz räumlich gesehen stets zwischen dem ersten und dritten Planetenradsatz angeordnet ist. Weiterhin weist das erfindungsgemäße Automatgetriebe mindestens fünf Schaltelemente auf. Ein Sonnenrad des dritten Planetenradsatzes ist über das als Bremse ausgebildete erste Schaltelement an einem Getriebegehäuse des Automatgetriebes festsetzbar. Eine Antriebswelle des Automatgetriebes ist ständig mit einem Sonnenrad des zweiten Planetenradsatzes verbunden. Weiterhin ist die Antriebswelle über das als Kupplung ausgebildete zweite Schaltelement mit einem Sonnenrad des ersten Planetenradsatzes und zusätzlich oder alternativ über das als Kupplung ausgebildet fünfte Schaltelement mit einem Steg des ersten Planetenradsatzes verbindbar. Alternativ ist das Sonnenrad des ersten Planetenradsatzes über das als Bremse ausgebildete dritte Schaltelement und/oder der Steg des ersten Planetenradsatzes über das als Bremse ausgebildete vierte Schaltelement an dem Getriebegehäuse festsetzbar. Sind also das zweite und fünfte Schaltelement gleichzeitig betätigt, so sind Sonnenrad und Steg des ersten Planetenradsatzes miteinander verbunden.

Eine Abtriebswelle des Mehrstufen-Automatgetriebes ist ständig mit einem Hohlrad des ersten Planetenradsatzes wirkverbunden, wobei das Hohlrad des ersten Planetenradsatzes zusätzlich ständig entweder mit einem Steg des dritten Planetenradsatzes oder einem Steg des zweiten Planetenradsatzes verbunden ist.

Wie bei der gattungsgemäßen DE 199 12 480 A1, ist der Steg des ersten Planetenradsatzes (je nach Radsatzkonzept) zusätzlich entweder ständig mit dem Hohlrad des zweiten Planetenradsatzes oder ständig mit dem Hohlrad des dritten Planetenradsatzes verbunden. Falls Hohlrad des ersten Planetenradsatzes und Steg des dritten Planetenradsatzes und Abtriebswelle miteinander gekoppelt sind, ist der Steg des zweiten Planetenradsatzes ständig mit einem Hohlrad des dritten Planetenradsatzes und der Steg des ersten Planetenradsatzes ständig mit einem Hohlrad des zweiten Planetenradsatzes verbunden. Falls Hohlrad des ersten Planetenradsatzes und Steg des zweiten Planetenradsatzes und Abtriebswelle miteinander gekoppelt sind, ist der Steg des dritten Planetenradsatzes ständig mit dem Hohlrad des zweiten Planetenradsatzes und der Steg des ersten Planetenradsatzes ständig mit dem Hohlrad des dritten Planetenradsatzes verbunden**.**

Im Unterschied zur gattungsgemäßen DE 199 12 480 A1 sind gemäß der Erfindung sowohl das fünfte Schaltelement, über welches die Antriebswelle mit dem Steg des ersten Planetenradsatzes verbindbar ist, als auch das zweite Schaltelement, über welches die Antriebswelle mit dem Sonnenrad des ersten Planetenradsatzes verbindbar ist, räumlich gesehen axial zwischen dem ersten und zweiten Planetenradsatz angeordnet. Der zweite und dritte Planetenradsatz sind unmittelbar axial nebeneinander angeordnet. Vorzugsweise ist dabei ein Lamellenpaket des fünften Schaltelementes auf einem größeren Durchmesser angeordnet als ein Lamellenpaket des zweiten Schaltelementes.

Der erste Planetenradsatz wird in axialer Richtung nur von höchstens einer Welle - insbesondere der Antriebswelle des Automatgetriebes - zentrisch vollständig durchgriffen. Entsprechend wird auch der zweite, mittlere Planetenradsatz höchstens von einer Welle - insbesondere der Antriebswelle - in axialer Richtung zentrisch durchgriffen.

In einer vorteilhaften Ausgestaltung der Erfindung bilden das zweite und fünfte Schaltelement eine vormontierbare Baugruppe, welche die jeweiligen Lamellenpakete und die jeweiligen Servoeinrichtungen dieser beiden Schaltelemente (Kupplungen) sowie einen für diese beiden Schaltelemente (Kupplungen) gemeinsamen Lamellenträger umfaßt. Die Servoeinrichtung des zweiten Schaltelementes kann räumlich gesehen sowohl auf der dem ersten Planetenradsatz zugewandten Seite des ihr zugeordneten Lamellenpaketes (des zweiten Schaltelementes) angeordnet sein, als auch auf der dem zweiten Planetenradsatz zugewandten Seite des ihr zugeordneten Lamellenpaketes. Auch die Servoeinrichtung des fünften Schaltelementes kann räumlich gesehen sowohl auf der dem ersten Planetenradsatz zugewandten Seite des ihr zugeordneten Lamellenpaketes (des fünften Schaltelementes) angeordnet sein, als auch auf der dem zweiten Planetenradsatz zugewandten Seite des ihr zugeordneten Lamellenpaketes.

In einer weiteren, baulängensparenden Ausgestaltung der Erfindung, die insbesondere bei nicht koaxialer Anordnung von Antriebs- und Abtriebswelle des Automatgetriebes günstig ist, wird vorgeschlagen, das vierte Schaltelement, über welches der Steg des ersten Planetenradsatzes festsetzbar ist, und das dritte Schaltelement, über welches das Sonnenrad des ersten Planetenradsatzes festsetzbar ist, räumlich gesehen in einem Bereich radial über den Planetenradsätzen anzuordnen. In vorteilhafter Weise können das dritte und vierte Schaltelement dabei eine vormontierbare Baugruppe bilden mit einem für diese beiden Schaltelemente (Bremsen) gemeinsamen Außenlamellenträger, welche die Lamellenpakete dieser beiden Schaltelemente (Bremsen) aufnimmt und in den zumindest Teile der Servoeinrichtungen dieser beiden Schaltelemente (Bremsen) integriert sind. Selbstverständlich können die Außenlamellenträger des dritten und/oder vierten Schaltelementes auch direkt in das Getriebegehäuse integriert sein.

Je nach radialem Bauraum, der im Kraftfahrzeug für das Automatgetriebe zur Verfügung steht, kann das dritte Schaltelement aber auch auf der Seite des ersten Planetenradsatzes angeordnet sein, die dem zweiten Planetenradsatz gegenüberliegt, insbesondere unmittelbar angrenzend an eine Außenwand des Getriebegehäuses.

In einer weiteren Ausgestaltung der Erfindung ist das erste Schaltelement, über welches das Sonnenrad des dritten Planetenradsatzes festsetzbar ist, räumlich gesehen auf der Seite des dritten Planetenradsatzes angeordnet, die dem zweiten Planetenradsatz gegenüberliegt. Es kann aber auch vorgesehen sein, daß das erste Schaltelement räumlich gesehen in einem Bereich radial über dem dritten Planetenradsatz angeordnet ist, beispielsweise zusammen mit dem vierten Schaltelement als vormontierbare Baugruppe, die einen für diese beiden Schaltelemente (Bremsen) gemeinsamen Außenlamellenträger und die Lamellenpakete dieser beiden Schaltelemente (Bremsen) und zumindest (in den gemeinsamen Außenlamellenträger integrierte) Teile der Servoeinrichtungen dieser beiden Schaltelemente (Bremsen) umfaßt. Selbstverständlich kann der Außenlamellenträger des ersten Schaltelementes auch direkt in das Getriebegehäuse oder in einen Gehäusedeckel, der eine Außenwand des Automatgetriebes bildet, integriert sein.

Für die Anwendung mit zueinander nicht koaxialer Antriebs- und Abtriebswelle, insbesondere für Anwendungen mit achsparallel oder winklig zueinander angeordneter Antriebs- und Abtriebswelle, wird vorgeschlagen, das erste Schaltelement benachbart zu einer Außenwand des Getriebegehäuses und einen Stirntrieb oder Kettentrieb räumlich gesehen axial zwischen dem dritten Planetenradsatz und dem ersten Schaltelement anzuordnen. Dabei ist dann ein erstes Stirnrad des Stirntriebs bzw. ein erstes Kettenrad des Kettentriebs mit dem Hohlrad des ersten Planetenradsatzes und - je nach Radsatzkonzept - entweder dem Steg des dritten oder des zweiten Planetenradsatzes verbunden. Entsprechend ist dann ein weiteres Stirnrad des Stirntriebs bzw. ein zweites Kettenrad des Kettentriebs mit der Abtriebswelle des Automatgetriebes verbunden. In fertigungstechnisch günstiger Weise kann eine Servoeinrichtung und/oder ein Lamellenträger des als Bremse ausgebildeten ersten Schaltelementes in eine Außenwand bzw. einen gehäusefesten Deckel des Getriebe gehäuses integriert sein.

In einer anderen Ausgestaltung der Stirntrieb- bzw. Kettentrieb-Anordnung kann aber auch vorgesehen sein, daß das erste Schaltelement zumindest teilweise axial neben dem dritten Planetenradsatz auf dessen dem zweiten Planetenradsatz gegenüberliegenden Seite angeordnet ist, und daß der Stirntrieb- bzw. Kettentrieb räumlich gesehen auf der anderen Seite des ersten Schaltelementes (also auf der dem dritten Planetenradsatz gegenüberliegenden Seite des ersten Schaltelementes) angeordnet ist. Dabei durchgreift dann eine mit dem Hohlrad des ersten Planetenradsatzes und dem Steg des dritten bzw. zweiten Planetenradsatzes verbundene Nabe des ersten Stirnrad des Stirntriebs bzw. des erstes Kettenrads des Kettentriebs das Sonnenrad des dritten Planetenradsatzes in axialer Richtung zentrisch. Bei einer derartigen Anordnung kann das als Bremse ausgebildete erste Schaltelement dabei räumlich gesehen neben dem ebenfalls als Bremse ausgebildeten vierten Schaltelement angeordnet sein, wobei dann vorzugsweise ein gleicher Lamellendurchmesser für dieser beiden Schaltelemente vorgesehen ist (Gleichteile-Konzept).

In einer weiteren Ausgestaltung der Stirntrieb- bzw. Kettentrieb-Anordnung kann auch vorgesehen sein, daß das erste Schaltelement räumlich gesehen zumindest weitgehend radial über dem dritten Planetenradsatz angeordnet ist, und daß der Stirntrieb- bzw. Kettentrieb räumlich gesehen auf der dem zweiten Planetenradsatz gegenüberliegenden Seite des dritten Planetenradsatzes axial an den dritten Planetenradsatz und das erste Schaltelement angrenzt.

Für die Anwendung mit koaxialer Antriebs- und Abtriebswelle wird vorgeschlagen, daß die Abtriebswelle des Automatgetriebes das neben dem dritten Planetenradsatz angeordnete erste Schaltelement und das Sonnenrad des dritten Planetenradsatzes in axialer Richtung zentrisch durchgreift und räumlich gesehen im Bereich axial zwischen dem zweiten und dritten Planetenradsatz mit den Steg des dritten bzw. zweiten Planetenradsatzes verbunden ist.

Durch die erfindungsgemäße Schachtelung der fünf Schaltelemente und drei Einzel-Planetenradsätze wird räumlich gesehen ein insgesamt sehr kompakter Getriebeaufbau erzielt. Die Druckmittelzuführungen zu den Servoeinrichtungen aller fünf Schaltelemente ist konstruktiv vergleichsweise einfach realisierbar. Das Druckmittel zur Betätigung der beiden rotierenden Kupplungen (zweite und fünfte Schaltelement) kann in einfacher Weise über nur eine rotierende Welle eingebracht werden. Entsprechend kann auch das Schmiermittel für einen dynamischen Druckausgleich der beiden rotierenden Kupplungen (zweite und fünfte Schaltelement) in einfacher Weise über nur eine rotierende Welle eingebracht werden. Die wesentlichen erfindungsrelevanten Merkmale des vorgeschlagenen Automatgetriebes sind sowohl mit einer nicht koaxialer - insbesondere achsparalleler oder winkliger - Anordnung von Getriebeantriebs- und Getriebeabtriebswelle kombinierbar, als auch mit einer koaxialen Anordnung von Getriebeantriebs- und Getriebeabtriebswelle.

Durch die beschriebene kinematische Koppelung der einzelnen Radsatzelemente untereinander und mit der Antriebs- und Abtriebswelle über die fünf Schaltelemente sind - wie beim Stand der Technik der DE 199 12 480 A1 - insgesamt sechs Vorwärtsgänge derart schaltbar, daß beim Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

Die Erfindung wird im folgenden anhand der Figuren näher erläutert, wobei ähnliche Elemente auch mit ähnlichen Bezugszeichen versehen sind. Es zeigen
- Fig. 1: ein Getriebeschema gemäß dem Stand der Technik;
- Fig. 2: ein Schaltschema des Getriebes gemäß Fig. 1;
- Fig. 3: eine beispielhafte erste schematische Bauteilanordnung gemäß der Erfindung;
- Fig. 4: eine beispielhafte zweite schematische Bauteilanordnung gemäß der Erfindung;
- Fig. 5: eine beispielhafte dritte schematische Bauteilanordnung gemäß der Erfindung;
- Fig. 6: eine beispielhafte vierte schematische Bauteilanordnung gemäß der Erfindung;
- Fig. 7: eine beispielhafte fünfte schematische Bauteilanordnung gemäß der Erfindung;
- Fig. 8: eine beispielhafte sechste schematische Bauteilanordnung gemäß der Erfindung;
- Fig. 9: eine beispielhafte siebte schematische Bauteilanordnung gemäß der Erfindung;
- Fig. 10: eine beispielhafte achte schematische Bauteilanordnung gemäß der Erfindung; und
- Fig. 11: eine beispielhafte neunte schematische Bauteilanordnung gemäß der Erfindung.

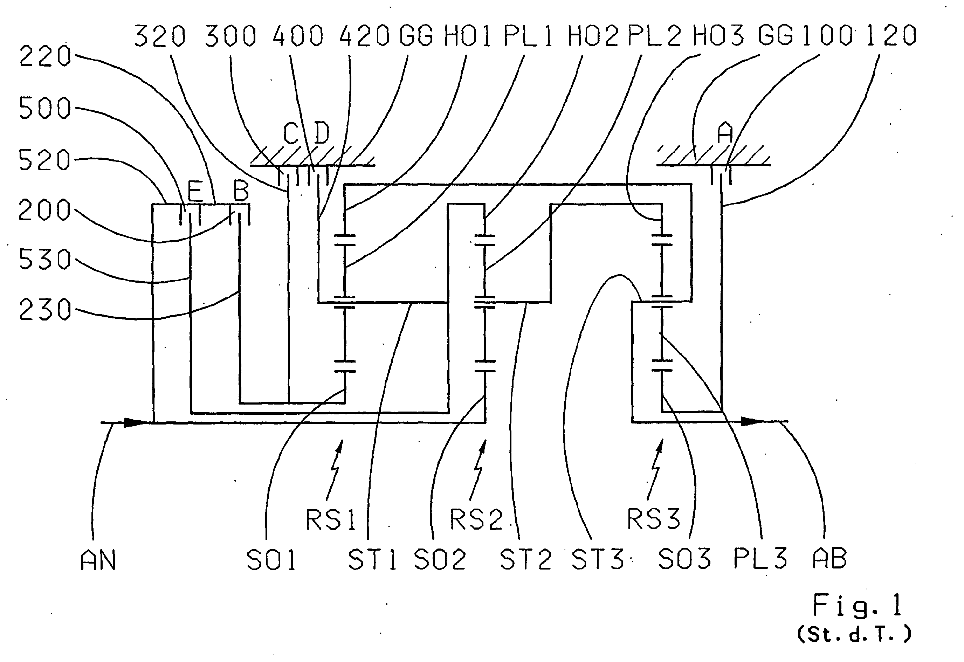

Zur Verdeutlichung der erfindungsgemäßen Bauteileanordnungen ist in Fig. 1 zunächst ein Getriebeschema eines Mehrstufen-Automatgetriebes für ein Kraftfahrzeug mit Standard-Antrieb dargestellt, wie aus dem Stand der Technik der DE 199 12 480 A1 bekannt. Mit AN ist eine Antriebswelle des Automatgetriebe bezeichnet, die mit einem (nicht dargestellten) Antriebsmotor des Automatgetriebes wirkverbunden ist, beispielsweise über einen Drehmomentwandler oder eine Anfahrkupplung oder einen Torsionsdämpfer oder ein Zweimassenschwungrad oder eine starre Welle. Mit AB ist eine Abtriebswelle des Automatgetriebes bezeichnet, die mit mindestens einer Antriebsachse des Kraftfahrzeugs wirkverbunden ist. In dem dargestellten Ausführungsbeispiel sind Antriebswelle AN und Abtriebswelle AB koaxial zueinander angeordnet. RS1, RS2 und RS3 bezeichnen drei gekoppelte Einfach-Planetenradsätze, die hier nebeneinander in Reihe in einem Getriebegehäuse GG angeordnet sind. Alle drei Planetenradsätze RS1, RS2, RS3 weisen jeweils ein Sonnenrad SO1, SO2 und SO3, jeweils ein Hohlrad HO1, HO2 und HO3, sowie jeweils einen Steg ST1, ST2 und ST3 mit Planetenrädern PL1, PL2 und PL3, die jeweils mit Sonnen- und Hohlrad des entsprechenden Radsatzes kämmen, auf. Mit A bis E sind fünf Schaltelemente bezeichnet, wobei das erste, dritte und vierte Schaltelement A, C, D als Bremse und das zweite und vierte Schaltelement B, E als Kupplung ausgeführt sind. Die jeweiligen Reibbeläge der fünf Schaltelemente A bis E sind als Lamellenpakete 100, 200, 300, 400 und 500 (jeweils mit Außen- und Innenlamellen bzw. Stahl- und Belaglamellen) angedeutet. Die jeweiligen Eingangselemente der fünf Schaltelemente A bis E sind
mit 120, 220, 320, 420 und 520 bezeichnet, die jeweiligen Ausgangselemente der Kupplungen B und E mit 230 und 530. Die kinematische Anbindung der einzelnen Radsatzelemente und Schaltelemente relativ zueinander und relativ zu Antriebs- und Abtriebswelle wurde bereits eingangs detailliert beschrieben, ebenso die räumliche Anordnung dieser Bauelemente.

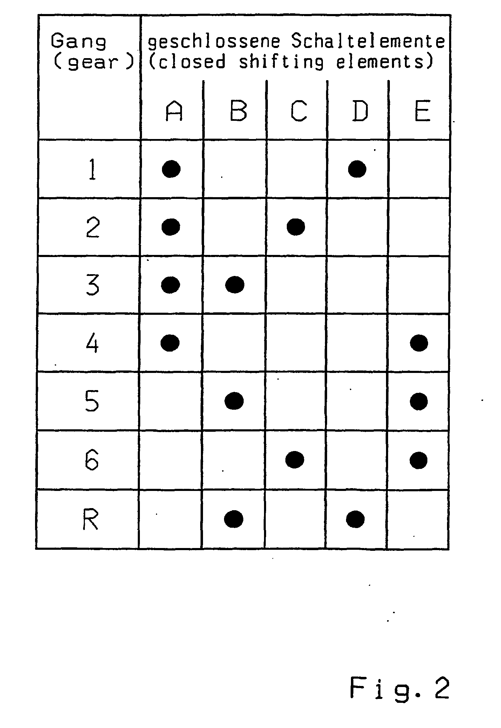

Wie aus dem Schaltschema in Fig. 2 ersichtlich, sind durch selektives Schalten von jeweils zwei der fünf Schaltelemente A bis E sechs Vorwärtsgänge gruppenschaltungsfrei schaltbar, also derart, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. In dem ersten Gang "1" sind die Bremsen A und D geschlossen, in dem zweiten Gang "2" die Bremsen A und C, in dem dritten Gang "3" Bremse A und Kupplung B, in dem vierten Gang "4" Bremse A und Kupplung E, in dem fünften Gang "5" die Kupplungen B und E, und in dem sechsten Gang "6" Bremse C und Kupplung E. In einem Rückwärtsgang "R" sind Kupplung B und Bremse D geschlossen.

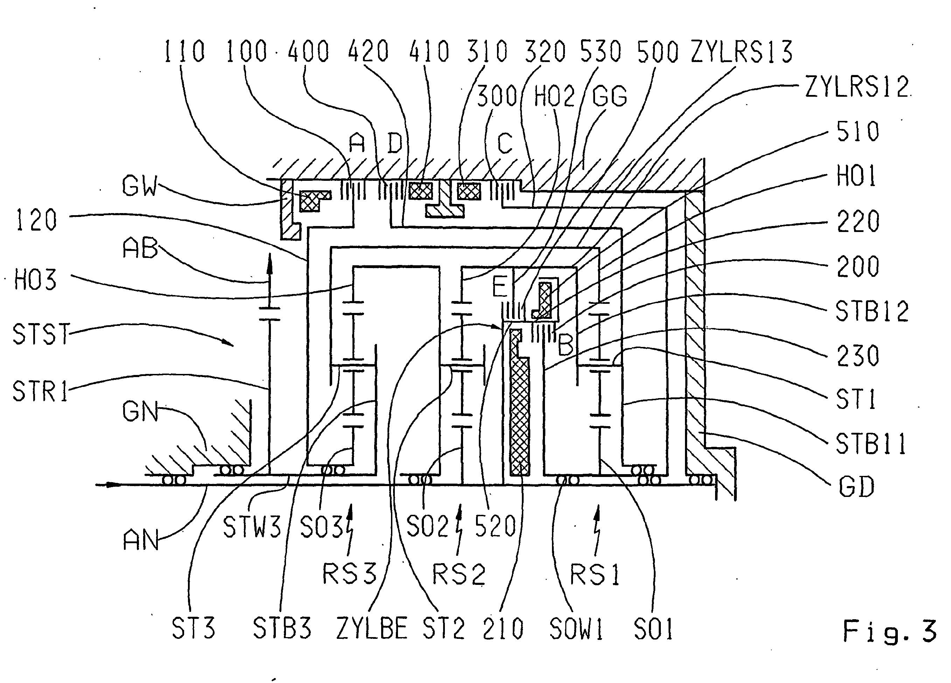

Anhand der Figuren 3 bis 11 werden im folgenden nun neun Beispiele für eine erfindungsgemäße Bauteilanordnung im Detail erläutert, beispielhaft in Verbindung mit nicht koaxialer Anordnung von Antriebs- und Abtriebswelle.

Fig. 3 zeigt nun eine erste schematische Bauteilanordnung, beispielhaft für die erfindungsgemäße Lösung der Aufgabe. Ausgehend vom zuvor beschriebenen Stand der Technik der DE 199 12 480 A1 weist das erfindungsgemäße Mehrstufen-Automatgetriebe drei koaxial zueinander angeordnete gekoppelte Einzel-Planetenradsätze RS1, RS2, RS3 auf. Räumlich gesehen ist der zweite Planetenradsatz RS2 axial zwischen dem ersten und dritten Planetenradsatz RS1, RS3 angeordnet und grenzt dabei axial unmittelbar an den dritten Planetenradsatz RS3 an. Weiterhin weist das erfindungsgemäße Automatgetriebe fünf Schaltelemente A bis E auf. Das erste, dritte und vierte Schaltelement A, C, D ist jeweils als Bremse (im Beispiel jeweils als Lamellenbremse) ausgebildet, das zweite und fünfte Schaltelement B, E jeweils als Kupplung (im Beispiel jeweils als Lamellenkupplung). Ein Sonnenrad SO3 des dritten Planetenradsatzes RS3 ist über die Bremse A an einem Getriebegehäuse GG des Automatgetriebes festsetzbar. Eine Antriebswelle AN des Automatgetriebes ist ständig mit einem Sonnenrad SO2 des zweiten Planetenradsatzes RS2 verbunden. Weiterhin ist die Antriebswelle AN über die Kupplung B mit einem Sonnenrad SO1 des ersten Planetenradsatzes RS1 und zusätzlich oder alternativ über die Kupplung E mit einem Steg ST1 des ersten Planetenradsatzes RS1 verbindbar. Alternativ ist das Sonnenrad SO1 des ersten Planetenradsatzes RS1 über die Bremse C und/oder der Steg ST1 des ersten Planetenradsatzes RS1 über die Bremse D an dem Getriebegehäuse GG festsetzbar.

Eine Abtriebswelle AB des Mehrstufen-Automatgetriebes ist ständig mit einem Hohlrad HO1 des ersten Planetenradsatzes RS1 wirkverbunden, wobei dieses Hohlrad HO1 bei der dargestellten beispielhaften Koppelung der Radsatzelemente zusätzlich ständig mit einem Steg ST3 des dritten Planetenradsatzes RS3 verbunden ist. Weiterhin ist ein Steg ST2 des zweiten Planetenradsatzes RS2 ständig mit einem Hohlrad HO3 des dritten Planetenradsatzes RS3 verbunden, sowie der Steg ST1 des ersten Planetenradsatzes RS1 ständig mit einem Hohlrad HO2 des zweiten Planetenradsatzes RS2. Das entsprechende Verbindungselement zwischen dem Hohlrad HO1 des ersten Planetenradsatzes RS1 und dem Steg ST3 des dritten Planetenradsatzes RS3 ist als Zylinder ZYLRS13 ausgebildet. Dieser Zylinder ZYLRS13 ist einerseits mit dem Hohlrad HO1 über eine geeignete Wirkverbindung verbunden, beispielsweise über eine Schweißverbindung, und erstreckt sich in axialer Richtung von dem Hohlrad HO1 bis über das Hohlrad HO3 hinüber. Andererseits ist der Zylinder ZYLRS13 auf der dem zweiten Planetenradsatz RS2 abgewandten Seite des dritten Planetenradsatzes RS3 über eine geeignete Wirkverbindung mit einem Stegblech STB3 des Stegs ST3 verbunden, beispielsweise über ein Mitnahmeprofil. Der Zylinder ZYLRS13 übergreift den zweiten und dritten Planetenradsatz RS2, RS3 also vollständig.

In dem in Fig. 3 dargestellten Ausführungsbeispiel sind Antriebswelle AN und Abtriebswelle AB nicht koaxial zueinander angeordnet. Zur Wirkverbindung zwischen Abtriebswelle AB und Steg ST3 des dritten Planetenradsatzes RS3 (und dem mit diesem Steg ST3 verbundenen Hohlrad HO1 des ersten Planetenradsatzes RS1) ist beispielhaft ein Stirntrieb STST vorgesehen. Wie bereits erwähnt, übergreift der Zylinder ZYLRS13 den dritten Planetenradsatz RS3 in axialer Richtung vollständig. Dabei ist der Zylinder ZYLRS13 auf der dem zweiten Planetenradsatz RS2 abgewandten Seite des dritten Planetenradsatzes RS3 mit dem Steg ST3 verbunden. Das dem zweiten Planetenradsatz RS2 zugewandte Stegblech des Stegs ST3 ist mit STB3 bezeichnet und erstreckt sich radial nach innen bis auf einen Durchmesser nahe der Antriebswelle AN. An seinem Innendurchmesser ist das Stegblech STB3 mit einer Stegwelle STW3 verbunden. Ausgehend vom Stegblech STB3 erstreckt sich diese Stegwelle STW3 in zum zweiten Planetenradsatz RS2 entgegengesetzter Richtung koaxial zur Antriebswelle AN und radial oberhalb der Antriebswelle AN und durchgreift dabei das Sonnenrad SO3 des dritten Planetenradsatzes RS3 zentrisch. Auf der dem zweiten Planetenradsatz RS2 gegenüberliegenden Seite des dritten Planetenradsatzes RS3 ist die Stegwelle STW3 mit einem ersten Stirnrad STR1 der Stirnradstufe STST verbunden und an einer getriebegehäusefesten Nabe GN gelagert. Die Stegwelle STW3 bildet also quasi die Nabe dieses ersten Stirnrades STR1. Das Sonnenrad SO3 des dritten Planetenradsatzes RS3 ist zweckmäßigerweise auf der Stegwelle STW3 gelagert.

Alle drei Planetenradsätze RS1, RS2 und RS3 werden in axialer Richtung von der Antriebswelle AN zentrisch vollständig durchgriffen. In dem in Fig. 3 dargestellten Beispiel ist ein (zur Vereinfachung hier nicht dargestellter) mit der Antriebswelle AN wirkverbundener Antriebsmotor auf der dem ersten Planetenradsatz RS1 abgewandten Getriebeseite angeordnet. Aus Fig. 3 ist aber auch einfach ersichtlich, daß - in Verbindung mit der nicht koaxialen Anordnung von Antriebswelle AN und Abtriebswelle AN - der Antriebsmotor auf beiden Stirnseiten des Getriebes angeordnet sein kann.

Die Bremse A, über die das Sonnenrad SO3 des dritten Planetenradsatzes RS3 festsetzbar ist, ist räumlich gesehen teilweise radial oberhalb des dritten Planetenradsatzes RS3 und teilweise auf der dem zweiten Planetenradsatz RS2 abgewandten Seite des dritten Planetenradsatzes RS3 angeordnet. Dabei grenzt ein als Innenlamellenträger ausgebildetes Eingangselement 120 der Bremse A axial an den Steg ST3 des dritten Planetenradsatzes RS3 an, auf dessen dem zweiten Planetenradsatz RS2 abgewandten Seite. Ein Lamellenpaket 100 der Bremse A mit Außen- und Belaglamellen ist auf großem Durchmesser im Bereich der zylindrischen Außenwand des Getriebegehäuses GG angeordnet, in axialer Richtung gesehen radial oberhalb des dritten Planetenradsatzes RS3. Ein geeignetes Mitnahmeprofil für die Außenlamellen des Lamellenpaketes 100 kann in einfacher Weise in das Getriebegehäuse GG integriert sein. Selbstverständlich kann für die Bremse A aber auch ein separater Außenlamellenträger vorgesehen sein, der dann über geeignete Mittel mit dem Getriebegehäuse GG form-, kraft- oder stoffschlüssig verbunden ist. Auf der dem dritten Planetenradsatz RS3 abgewandeten Seite des Innenlamellenträgers (120) der Bremse A grenzt das Stirnrad STR1 axial an einen scheibenförmigen Abschnitt dieses Innenlamellenträgers (120) unmittelbar an.

Ebenfalls auf der dem zweiten Planetenradsatz RS2 abgewandten Seite des dritten Planetenradsatzes RS3, in axialer Richtung gesehen im Bereich zwischen Stirnrad STR1 und Planetenradsatz RS3, in radialer Richtung gesehen im Bereich der zylindrischen Außenwand des Getriebegehäuses GG, ist eine Servoeinrichtung 110 der Bremse A zur Betätigung der Lamellen 100 in einfacher Weise in das Getriebegehäuse GG und eine mit dem Getriebegehäuse GG verbundene (beispielsweise verschraubte) Gehäusewand GW integriert. Selbstverständlich kann diese Gehäusewand auch als Teil des Getriebegehäuses ausgeführt sein, also als ein Gehäuseabschnitt radialer Erstreckung. Gehäusewand GW und Getriebegehäuse GG weisen einen entsprechenden Kolbenraum (Druckraum) auf, in dem ein (zur Vereinfachung hier nicht dargestellter) druckbeaufschlagbarer Kolben der Servoeinrichtung 110 verschiebbar gelagert ist, sowie eine entsprechende (hier ebenfalls nicht dargestellte) Druckmittelzufuhr zu diesem Kolbenraum. Bei einer Druckbeaufschlagung dieses Kolbenraums betätigt der Kolben der Servoeinrichtung 110 die Lamellen 100 der Bremse A axial in Richtung der drei Planetenradsätze RS1, RS2, RS3. Dem Fachmann ist klar, daß die räumliche Lage von Servoeinrichtung 110 und/oder Lamellen 100 der Bremse A insbesondere in axialer Richtung gesehen nicht auf das in Fig. 3 dargestellte Beispiel beschränkt ist. So können Servoeinrichtung 110 und/oder Lamellen 100 der Bremse A beispielsweise auch auf einem kleineren Durchmesser im Bereich axial zwischen Stirnradstufe STST und Planetenradsatz RS3 angeordnet sein, oder auch axial in Richtung des Planetenradsatzes RS1 verschoben beispielsweise in einem Bereich über dem zweiten Planetenradsatz RS2 oder dem ersten Planetenradsatz RS1.

Die Kupplung B, über welche die Antriebswelle AN mit dem Sonnenrad SO1 des ersten Planetenradsatzes RS1 verbindbar ist, und die Kupplung E, über welche die Antriebswelle AN mit dem Steg ST1 des ersten Planetenradsatzes RS1 verbindbar ist, sind räumlich gesehen zwischen dem ersten und zweiten Planetenradsatz RS1, RS2 angeordnet. Dabei ist die Kupplung E in axialer Richtung gesehen radial über der Kupplung B angeordnet. Die mit dem vollen Antriebsdrehmoment des Antriebsmotors belasteten Lamellen 500 der Kupplung E weisen also einen größeren Durchmesser auf als die Lamellen 200 der Kupplung B und sind somit auf einem vergleichsweise großen Durchmesser radial unterhalb des Zylinders ZYLRS13 angeordnet.

In dem in Fig. 3 dargestellten Beispiel ist für beide Kupplungen B, E ein gemeinsamer Lamellenträger ZYLBE vorgesehen, welcher einerseits für die Kupplung B einen Außenlamellenträger (Eingangselement 220 der Kupplung B) und andererseits für die Kupplung E einen Innenlamellenträger (Eingangselement 520 der Kupplung E) bildet. Wie in Fig. 3 angedeutet, sind die Außenlamellen des Lamellenpaketes 200 und die Innenlamellen des Lamellenpaketes 500 hier vorzugsweise als Stahllamellen ausgeführt, die Innenlamellen des Lamellenpaketes 200 und die Außenlamellen des Lamellenpaketes 500 entsprechend als Belaglamellen.

Der für die beiden Kupplungen B, E gemeinsame Lamellenträger ZYLBE ist als in Richtung des ersten Planetenradsatze RS1 hin geöffneter Topf ausgebildet, mit einem scheibenförmigen Topfboden, der axial unmittelbar an den Steg ST2 des zweiten Planetenradsatze RS2 angrenzt und an seinem Innendurchmesser mit der Antriebswelle AN verbunden ist. Der sich axial in Richtung des ersten Planetenradsatzes RS1 erstreckende zylindrische Abschnitt des Lamellenträgers ZYLBE weist an seinem Außendurchmesser ein geeignetes Mitnahmeprofil für die Innenlamellen der Kupplung E und an seinem Innendurchmesser.ein geeignetes Mitnahmeprofil für die Außenlamellen der Kupplung B auf. Räumlich gesehen ist dabei das Mitnahmeprofil für die Innenlamellen der Kupplung E näher am zweiten Planetenradsatz RS2 angeordnet als das Mitnahmprofil für die Außenlamellen der Kupplung B. Entsprechend ist auch das Lamellenpaket 500 der Kupplung E näher am zweiten Planetenradsatz RS2 angeordnet als das Lamellenpaket 200 der Kupplung B. Der Teil des zylindrischen Abschnitts des Lamellenträgers ZYLBE mit dem Mitnahmeprofil für die Innenlamellen der Kupplung E bildet also zusammen mit dem scheibenförmigen Topfboden des Lamellenträgers ZYLBE das Eingangselement 520 der Kupplung E. Entsprechend bildet der Teil des zylindrischen Abschnitts des Lamellenträgers ZYLBE mit dem Mitnahmeprofil für die Außenlamellen der Kupplung B das Eingangselement 220 der Kupplung B. Das Eingangselement 220 der Kupplung B ist folglich über das Eingangselement 520 der Kupplung E mit der Antriebswelle AN verbunden.

Eine Servoeinrichtung 210 der Kupplung B ist räumlich gesehen innerhalb des Zylinderraumes des Lamellenträgers ZYLBE angeordnet, grenzt dabei einerseits zumindest abschnittsweise axial unmittelbar an den scheibenförmigen Abschnitt (Topfboden) des Lamellenträgers ZYLBE an, ist andererseits räumlich gesehen zumindest abschnittsweise auch radial unterhalb des Lamellenpaketes 500 der Kupplung E angeordnet. Die Servoeinrichtung 210 umfaßt dabei zumindest einen (zur Vereinfachung hier nicht näher dargestellten) Druckraum und einem (hier ebenfalls nicht dargestellten) Kolben. Bei einer Druckbeaufschlagung dieses Druckraumes betätigt dieser Kolben das Lamellenpaket 200 in bekannter Weise gegen eine Rückstellkraft eines (hier ebenfalls nicht näher dargestellten) Rückstellelementes der Servoeinrichtung 210 axial in Richtung des ersten Planetenradsatzes RS1. Da der Lamellenträger ZYLBE stets mit Drehzahl der Antriebswelle AN rotiert, ist es zweckmäßig, daß die Servoeinrichtung 210 auch einen dynamischen Druckausgleich aufweist zum Ausgleich des rotatorischen Druckes des mit Antriebswellendrehzahl rotierenden Druckraums der Servoeinrichtung 210.

Ein Ausgangselement 230 der Kupplung B ist hier als scheibenförmiger Innenlamellenträger ausgebildet, der sich ausgehend von einem geeigneten Mitnahmeprofil zur Aufnahme der Innenlamellen der Kupplung B, axial angrenzend an die Servoeinrichtung 210, radial nach innen erstreckt bis zu einer Sonnenwelle SOW1, mit der er verbunden ist. Diese Sonnenwelle SOW1 ist auf der Antriebswelle AN gelagert und erstreckt sich - koaxial zur Antriebswelle AN - axial zunächst in Richtung der ersten Planetenradsatzes RS1 und ist mit dem Sonnenrad SO1 des ersten Planetenradsatze RS1 verbunden. In diesem axialen Abschnitt bildet die Sonnenwelle SOW1 also quasi die Nabe des Innenlamellenträgers (230) der Kupplung B. Im weiteren axialen Verlauf durchgreift die Sonnenwelle SOW1 den ersten Planetenradsatz RS1 zentrisch vollständig und erstreckt sich axial bis zu einem Gehäusedeckel GD, der mit dem Getriebegehäuse GG verbunden (beispielsweise verschraubt) ist und eine Stirnwand des Getriebes bildet. Selbstverständlich können Gehäusedeckel GD und Getriebegehäuse GG auch einstückig ausgeführt sein. Auf der der Kupplung B abgewandeten Seite des ersten Planetenradsatzes RS1 ist ein Stegblech STB11 des Stegs ST1 auf der Sonnenwelle SOW1 gelagert. Auf die zusätzliche kinematische Anbindung des Ausgangselementes 230 der Kupplung B an die Bremse C wird später noch im Detail eingegangen.

Eine Servoeinrichtung 510 der Kupplung E ist räumlich gesehen oberhalb des Eingangselementes 220 der Kupplung B angeordnet. Zur Aufnahme dieser Servoeinrichtung 510 weist der Lamellenträger ZYLBE einen weiteren Zylinderraum auf, der in axialer Richtung gesehen zumindest überwiegend radial oberhalb des Teils des zylindrischen Abschnitts des Lamellenträgers ZYLBE mit dem Mitnahmeprofil für die Außenlamellen der Kupplung B angeordnet ist. Die Servoeinrichtung 510 umfaßt dabei zumindest einen (zur Vereinfachung hier nicht näher dargestellten) Druckraum und einem (hier ebenfalls nicht dargestellten) Kolben. Bei einer Druckbeaufschlagung dieses Druckraumes betätigt dieser Kolben das Lamellenpaket 500 in bekannter Weise gegen eine Rückstellkraft eines (hier ebenfalls nicht näher dargestellten) Rückstellelementes der Servoeinrichtung 210 axial in Richtung des zweiten Planetenradsatzes RS2. Da der Lamellenträger ZYLBE stets mit Drehzahl der Antriebswelle AN rotiert, ist es zweckmäßig, daß auch die Servoeinrichtung 510 einen dynamischen Druckausgleich aufweist zum Ausgleich des rotatorischen Druckes des mit Antriebswellendrehzahl rotierenden Druckraums der Servoeinrichtung 510.

Ein Ausgangselement 530 der Kupplung E ist hier als scheibenförmiger Außenlamellenträger ausgebildet, der sich ausgehend von einem geeigneten Mitnahmeprofil zur Aufnahme der Außenlamellen der Kupplung E, axial angrenzend an die Servoeinrichtung 510, radial nach außen erstreckt bis zu einem Zylinder ZYLRS12, mit dem er verbunden ist. Dieser Zylinder ZYLRS12 bildet die kinematische Verbindung zwischen dem Steg ST1 des ersten Planetenradsatzes RS1 und dem Hohlrad HO2 des zweiten Planetenradsatzes RS2, ist räumlich gesehen unterhalb des Zylinders ZYLRS13 angeordnet und erstreckt sich in axialer Richtung von dem Hohlrad HO2 bis zu dem dem Planetenradsatz RS2 zugewandten Stegblech STB12 des Stegs ST1. Vom Prinzip her kann dieser Zylinder ZYLRS12 auch als Teil des Ausgangselementes der Kupplung E interpretiert werden.

Wie in Fig. 3 weiterhin ersichtlich, sind die Bremse C, über welche das Sonnenrad SO1 des ersten Planetenradsatzes RS1 an dem Getriebegehäuse GG festsetzbar ist, und die Bremse D, über welche der Steg ST1 des ersten Planetenradsatzes RS1 (und das mit diesem Steg ST1 verbundene Hohlrad HO2 des zweiten Planetenradsatzes RS2) am Getriebegehäuse GG festsetzbar ist, nebeneinander angeordnet, räumlich gesehen radial oberhalb der Planetenradsätze auf einem vergleichsweise großen Durchmesser im Bereich des Innendurchmessers des Getriebegehäuses GG. Dabei grenzt das Lamellenpaket 400 der Bremse D axial an das Lamellenpaket 100 der Bremse A an und ist hier beispielhaft räumlich gesehen in einem Bereich radial über den beiden unmittelbar benachbarten Planetenradsätzen RS2 und RS3 angeordnet. Das Lamellenpaket 300 der Bremse C ist hier beispielhaft räumlich gesehen in einem Bereich radial über dem Planetenradsatz RS2 und der zu diesem unmittelbar benachbarten Kupplung E angeordnet. Die Bremse C ist hier also näher am ersten Planetenradsatz RS1 angeordnet als die Bremse D, bzw. die Bremse D ist hier näher am dritten Planetenradsatz RS3 angeordnet als die Bremse C.

In dem in Fig. 3 dargestellten Beispiel übernimmt das Getriebegehäuse GG gleichzeitig die Funktion eines Außenlamellenträgers für beide Bremsen C, D. In einer anderen konstruktiven Ausgestaltung können selbstverständlich auch separate Außenlamellenträger für die Bremsen C, D vorgesehen sein, welche dann über geeignete Mittel mit dem Getriebegehäuse verdrehfest verbunden sind, oder auch ein für beide Bremsen C, D gemeinsamer Außenlamellenträger.

Die den Lamellenpaketen 400, 300 zugeordneten Servoeinrichtungen 410, 310 sind axial nebeneinander axial zwischen diesen beiden Lamellenpakten 400, 300 angeordnet. In dem in Fig. 3 dargestellten Beispiel sind die beiden Servoeinrichtungen 410, 310 in ein gemeinsames getriebegehäusefestes Bauteil mit entsprechenden Kolbenräumen (Druckräumen), in denen jeweils zumindest ein verschiebbar gelagerter druckbeaufschlagbarer Kolben der jeweiligen Servoeinrichtung 310 bzw. 410 angeordnet ist, integriert. Bei einer Druckmittelzufuhr zu dem Kolbenraum der Servoeinrichtung 410 betätigt deren Kolben das Lamellenpaket 400 der Bremse D axial in Richtung der Bremse A bzw. des dritten Planetenradsatzes RS1 bzw. in zum ersten Planetenradsatz RS1 entgegengesetzter Richtung. Entsprechend betätigt der Kolben der Servoeinrichtung 310 bei einer Druckmittelzufuhr zu dem Kolbenraum der Servoeinrichtung 310 das Lamellenpaket 300 der Bremse C axial in Richtung des ersten Planetenradsatzes RS1. Für den Fachmann ist leicht ersichtlich, daß die Druckmittelzufuhr zu diesen beiden Servoeinrichtungen 310, 410 vergleichsweise einfach ist.

Bei geeigneter konstruktiven Ausgestaltung können die beiden Servoeinrichtungen 410, 310 auch direkt in das Getriebegehäuse integriert sein. Ist beispielsweise für die beiden Bremsen C, D ein gemeinsamer Außenlamellenträger als separates Bauteil vorgesehen, können die Servoeinrichtungen 410, 310 auch in einfacher Weise in diesen Außenlamellenträger integriert sein, sodaß sich in diesem Fall eine fertigungstechnisch günstige vormontierbare Baugruppe ergibt.

Wie in Fig. 3 weiterhin angedeutet, ermöglicht die hier beschriebene Bauteilanordnung ein Gleichteilekonzept zumindest für die Lamellen 300, 400 und gegebenenfalls auch für die Servoeinrichtungen der Bremsen C und D, aber auch für die Lamellen 100, 300, 400 aller drei Bremsen A, C und D des Automatgetriebes.

Ein mit 420 bezeichnetes Eingangselement der Bremse D ist als zylinderförmiger Innenlamellenträger ausgebildet, der sich räumlich gesehen abschnittsweise radial oberhalb des Zylinders ZYLRS13 erstreckt, dabei den ersten und zweiten Planetenradsatz RS1, RS2 in axialer Richtung radial übergreift, und auf der dem zweiten Planetenradsatz RS2 abgewandten Seite des ersten Planetenradsatzes RS1 mit dem Steg ST1 des ersten Planetenradsatzes RS1 verbunden ist. Das entsprechende, dem zweiten Planetenradsatz RS2 gegenüberliegende Stegblech des Stegs ST1 ist mit STB11 bezeichnet. Zur Abstützung des Innenlamellenträgers (420) der Bremse D ist das Stegblech STB11 auf der Sonnenwelle SOW1 gelagert.

Ein mit 320 bezeichnetes Eingangselement der Bremse C ist als zylinderförmiger Innenlamellenträger ausgebildet, der sich räumlich gesehen abschnittsweise radial oberhalb des den Zylinder ZYLRS13 übergreifenden zylindrischen Abschnitts des Innenlamellenträgers (420) der Bremse D erstreckt, dabei den ersten Planetenradsatz RS1 und die beiden Kupplungen B, E in axialer Richtung radial übergreift, und auf der dem zweiten Planetenradsatz RS2 abgewandten Seite des Stegblechs STB11 des ersten Planetenradsatzes RS1 mit der Sonnenwelle SOW1 verbunden ist. Der scheibenförmige Zylinderboden des Innenlamellenträgers (320) der Bremse C grenzt dabei an den Gehäusedeckel GD an, der - wie bereits beschrieben - eine Außenwand des Automatgetriebes bildet.

Zur Anpassung der Außenkontur des Getriebegehäuses an einen real für das Automatgetriebes zur Verfügung stehenden Einbauraum kann die räumliche Lage der beiden Bremsen D, C selbstverständlich auch in axialer Richtung gegenüber dem in Fig. 3 dargestellten Beispiel verschoben sein.

Durch die in Fig. 3 dargestellte Bauteilanordnung wird ein räumlich gesehen insgesamt schlanker Getriebeaufbau erzielt. Da die Antriebswelle das gesamte Getriebe in axialer Richtung durchdringt, ist die in Fig. 3 dargestellte Bauteilanordnung mit nicht koaxialer Lage von Antriebs- und Abtriebswelle für den Fachmann auch konstruktiv einfach für eine Anwendung mit koaxial zueinander verlaufenden Antriebs- und Abtriebswelle umgestaltbar.

Das Schaltschema des Mehrstufen-Automatgetriebes gemäß Fig. 3 entspricht dem in Fig. 2 dargestellten Schaltschema. Wie beim Stand der Technik der DE 199 12 480 A1 sind durch selektives Schalten von jeweils zwei der fünf Schaltelemente also sechs Vorwärtsgänge gruppenschaltungsfrei schaltbar.

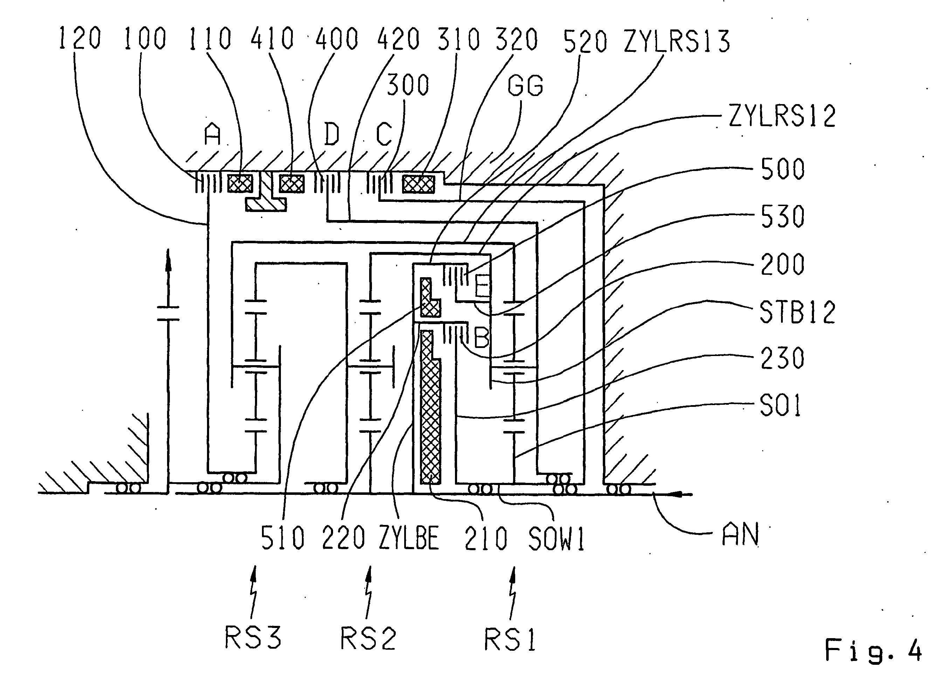

Anhand der Figuren 4 bis 8 werden im folgenden fünf weitere erfindungsgemäße Bauteilanordnungen näher erläutert, alle mit gegenüber der zuvor im Detail beschriebenen ersten Bauteilanordnung gemäß Fig. 3 unveränderter kinematischen Kopplung der Planetenradsatzelemente untereinander und zu den Schaltelementen, alle auch mit einer aus den Kupplungen B und E bestehenden Baugruppe, die räumlich gesehen axial zwischen dem ersten und zweiten Planetenradsatz RS1, RS2 angeordnet ist, wobei stets die Kupplung B räumlich gesehen radial unterhalb der Kupplung E und in einem durch diese Kupplung E gebildeten Kupplungsraum angeordnet ist.

Fig. 4 zeigt nun eine zweite schematische Bauteilanordnung, beispielhaft für die erfindungsgemäße Lösung der Aufgabe. Die wesentlichen Unterschiede zu der ersten Bauteilanordnung gemäß Fig. 3 sind die konstruktive Ausgestaltung der Baugruppe mit den beiden Kupplungen B, E und die räumliche Anordnung der Servoeinrichtungen der drei Bremsen A, C und D relativ zu ihren Lamellenpaketen.

Wie in Fig. 4 ersichtlich, umfaßt die Baugruppe der beiden Kupplungen B, E einen Lamellenträger ZYLBE, ein radial inneres Lamellenpaket 200 mit Servoeinrichtung 210 der Kupplung B, sowie ein radial äußeres Lamellenpaket 500 mit Servoeinrichtung 510 der Kupplung E. Im Unterschied zu Fig. 3 sind die Außenlamellen beider Lamellenpakete 200, 500 vorzugsweise als Stahllamellen ausgeführt, die Innenlamellen beider Lamellenpakete 200, 500 entsprechend dann als Belaglamellen. Der Lamellenträger ZYLBE ist nunmehr als ein topfförmiger Doppelzylinder ausgebildet, mit einem scheibenförmigen Topfboden, der an seinem Innendurchmesser mit der Antriebswelle AN verbunden ist, sowie mit zwei voneinander unabhängigen zylindrischen Abschnitte, die sich beide ausgehend vom Topfboden axial in Richtung des ersten Planetenradsatzes erstrecken. Der Durchmesser des ersten dieser beiden zylindrischen Abschnitte ist vorzugsweise etwas größer als der Stegdurchmesser der benachbarten Planetenradsätze RS1 und RS2. Der Durchmesser des zweiten dieser beiden zylindrischen Abschnitte entspricht ungefähr dem Hohlraddurchmesser der benachbarten Planetenradsätze RS1 und RS2, ist aber in jedem Fall kleiner als der Durchmesser des Zylinders ZYLRS12, der bekanntlich die Wirkverbindung zwischen dem Hohlrad des zweiten Planetenradsatzes RS2 und dem Steg des ersten Planetenradsatzes RS1 bildet. Der Lamellenträger ZYLBE ist für beide Kupplungen B, E deren Eingangselement 220 bzw. 520 und für beide Kupplungen B, E deren Außenlamellenträger. Entsprechend weist der (radial innere) erste zylindrische Abschnitt des Lamellenträgers ZYLBE an seinem Innendurchmesser ein geeignetes Mitnahmeprofil für die Außenlamellen des Lamellenpaketes 200 der Kupplung B auf, und der (radial äußere) zweite zylindrische Abschnitt des Lamellenträgers ZYLBE an seinem Innendurchmesser ein geeignetes Mitnahmeprofil für die Außenlamellen des Lamellenpaketes 500 der Kupplung E. Räumlich gesehen ist das Lamellenpaket 500 zumindest weitgehend radial über dem Lamellenpaket 200 angeordnet.

Die Servoeinrichtung 210 der Kupplung B ist räumlich gesehen innerhalb des Zylinderraumes des Lamellenträgers ZYLBE angeordnet, der durch den (radial inneren) ersten zylindrischen Abschnitt des Lamellenträgers ZYLBE gebildet wird und grenzt dabei zumindest abschnittsweise axial unmittelbar an den scheibenförmigen Abschnitt (Topfboden) des Lamellenträgers ZYLBE an. Die Servoeinrichtung 210 umfaßt dabei zumindest einen (zur Vereinfachung hier nicht näher dargestellten) Druckraum und einem (hier ebenfalls nicht dargestellten) Kolben. Bei einer Druckbeaufschlagung dieses Druckraumes betätigt dieser Kolben das Lamellenpaket 200 der Kupplung B in bekannter Weise gegen eine Rückstellkraft eines (hier ebenfalls nicht näher dargestellten) Rückstellelementes der Servoeinrichtung 210 axial in Richtung des ersten Planetenradsatzes RS1.

Die Servoeinrichtung 510 der Kupplung E ist räumlich gesehen innerhalb des Zylinderringraumes des Lamellenträgers ZYLBE angeordnet, der durch den (radial äußeren) zweiten zylindrischen Abschnitt des Zylinders ZYLBE gebildet und nach innen hin durch den (radial inneren) ersten zylindrischen Abschnitt des Lamellenträgers ZYLBE begrenzt wird. Wie auch die Servoeinrichtung 210 grenzt die Servoeinrichtung 510 zumindest abschnittsweise axial unmittelbar an den scheibenförmigen Abschnitt (Topfboden) des Lamellenträgers ZYLBE an. Die Servoeinrichtung 510 umfaßt dabei zumindest einen (zur Vereinfachung hier nicht näher dargestellten) Druckraum und einem (hier ebenfalls nicht dargestellten) Kolben. Bei einer Druckbeaufschlagung dieses Druckraumes betätigt dieser Kolben das Lamellenpaket 500 der Kupplung E in bekannter Weise gegen eine Rückstellkraft eines (hier ebenfalls nicht näher dargestellten) Rückstellelementes der Servoeinrichtung 510 axial in Richtung des ersten Planetenradsatzes RS1.

Da der Lamellenträger ZYLBE stets mit Drehzahl der Antriebswelle AN rotiert, ist es zweckmäßig, daß beide Servoeinrichtungen 210 und 510 auch einen dynamischen Druckausgleich aufweisen zum Ausgleich des rotatorischen Druckes der mit Antriebswellendrehzahl rotierenden Druckräume dieser Servoeinrichtungen 210 bzw. 510.

Ein Ausgangselement 230 der Kupplung B ist - wie in Fig. 3 - als scheibenförmiger Innenlamellenträger ausgebildet, der sich ausgehend von einem geeigneten Mitnahmeprofil zur Aufnahme der Innenlamellen des Lamellenpaketes 200 der Kupplung B, axial angrenzend an die Servoeinrichtung 210 der Kupplung B, radial nach innen erstreckt bis zu einer auf der Antriebswelle AN gelagerten Sonnenwelle SOW1. Wie in Fig. 3 durchgreift diese Sonnenwelle SOW1 den ersten Planetenradsatz RS1 zentrisch und ist sowohl mit dem Innenlamellenträger (230) der Kupplung B verbunden, als auch mit dem Sonnenrad SO1 des ersten Planetenradsatze RS1 und dem Eingangselement 320 der Bremse C.

Ein Ausgangselement 530 der Kupplung E ist - im Unterschied zu Fig. 3 - als Innenlamellenträger ausgebildet. Ausgehend von einem geeigneten Mitnahmeprofil zur Aufnahme der Innenlamellen des Lamellenpaketes 500 der Kupplung E, axial angrenzend an die Servoeinrichtung 510 der Kupplung E, erstreckt.sich dieser Innenlamellenträger (530) auf einem Durchmesser oberhalb des (radial inneren) ersten zylindrischen Abschnitts des Lamellenträgers ZYLBE axial in Richtung des ersten Planetenradsatzes RS1 bis zu dem Stegblech STB12 des ersten Planetenradsatzes RS1 und ist mit diesem Stegblech STB12 verbunden.

Wie in Fig. 4 weiterhin ersichtlich, sind die Bremsen A, D, C ähnlich wie in Fig. 3 am Innendurchmesser des Getriebegehäuses GG räumlich gesehen in einem Bereich radial oberhalb der beiden Planetenradsätze RS3, RS2 und der Kupplung E angeordnet, jedoch mit gegenüber Fig. 3 geänderter Betätigungsrichtung für alle drei Servoeinrichtungen 110, 410, 310 der Bremsen A, D, C. Die Servoeinrichtungen 110 der Bremse A und die Servoeinrichtung 410 der Bremse D sind nunmehr unmittelbar axial nebeneinander angeordnet, axial zwischen den Lamellenpaketen 100, 400 der beiden Bremsen A, D und dabei beispielhaft in ein gemeinsames Getriebegehäusefestes Bauelement integriert. Das Lamellenpaket 100 der Bremse A ist nunmehr zumindest teilweise in axialer Richtung gesehen neben dem dritten Planetenradsatz RS3 auf dessen dem zweiten Planetenradsatz RS2 abgewandten Seite angeordnet, auf einem Durchmesser größer dem ZYLRS13, welcher bekanntlich die Wirkverbindung zwischen dem Steg des dritten Planetenradsatzes RS3 und dem Hohlrad des ersten Planetenradsatzes RS1 bildet. Das Lamellenpaket 400 der Bremse D ist räumlich gesehen in etwa radial über dem zweiten Planetenradsatz RS2 angeordnet und wird beim Schließen durch die Servoeinrichtung 410 axial in Richtung des ersten Planetenradsatzes RS1 betätigt bzw. gedrückt. Entsprechend axial umgekehrt ist die Betätigungsrichtung der Servoeinrichtung 110 beim Schließen des Lamellenpaketes 100 der Bremse A. Das Lamellenpaket 300 der Bremse C grenzt nunmehr axial unmittelbar an das Lamellenpaket 400 der Bremse D an und ist räumlich gesehen ebenfalls in etwa radial über dem zweiten Planetenradsatz RS2 angeordnet. Entsprechend ist die hier beispielhaft in das Getriebegehäuse GG integrierte Servoeinrichtung 310 der Bremse C räumlich gesehen zumindest überwiegend radial über der Kupplung E angeordnet und betätigt das Lamellenpaket 300 beim Schließen axial in Richtung der benachbarten Bremse D bzw. in zum ersten Planetenradsatz RS1 entgegengesetzter Richtung.

Das Eingangselement 120 der Bremse A ist nunmehr zumindest weitgehend scheibenförmig ausgebildet und erstreckt sich in radialer Richtung parallel zum dritten Planetenradsatz RS3. Die Eingangselemente 420 der Bremse D und 320 der Bremse C sind gegenüber Fig. 3 im Prinzip unverändert.

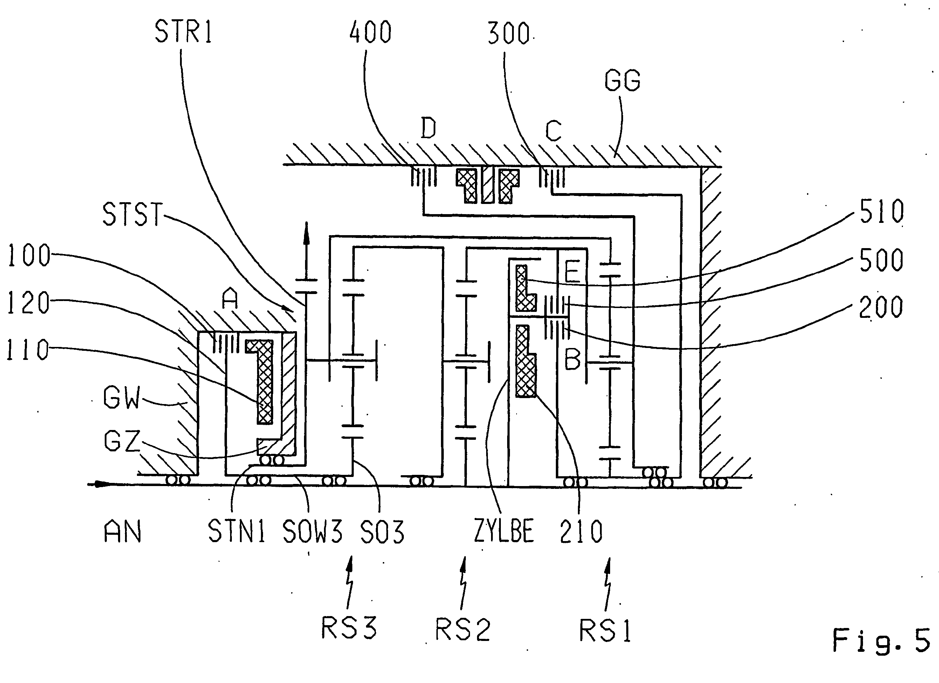

Fig. 5 zeigt nun eine dritte schematische Bauteilanordnung als beispielhafte erfindungsgemäße Lösung der Aufgabe. Gegenüber der ersten Bauteilanordnung gemäß Fig. 3 modifiziert ist zum einen die konstruktive Ausgestaltung der Baugruppe mit den beiden Kupplungen B, E im Zusammenhang mit einer geänderten Betätigungsrichtung der Kupplung E, zum anderen auch die räumliche Anordnung der Bremse A relativ zum dritten Planetenradsatz RS3 und zum Stirntrieb (Stirnradstufe STST).

Wie in Fig. 5 ersichtlich, umfaßt die Baugruppe der beiden Kupplungen B, E unverändert einen für beide Kupplungen B und E gemeinsamen Lamellenträger ZYLBE, ein radial inneres Lamellenpaket 200 mit Servoeinrichtung 210 der Kupplung B, sowie ein radial äußeres Lamellenpaket 500 mit Servoeinrichtung 510 der Kupplung E. Wie in Fig. 3 bildet der Lamellenträger ZYLBE als Eingangselement beider Kupplungen B, E den Außenlamellenträger der Kupplung B und den Innenlamellenträger der Kupplung E. Wie in Fig. 3 sind die Außenlamellen des Lamellenpaketes 200 und die Innenlamellen des Lamellenpaketes 500 vorzugsweise als Stahllamellen ausgeführt, die Innenlamellen des Lamellenpaketes 200 und die Außenlamellen des Lamellenpaketes 500 entsprechend als Belaglamellen.

Dabei ist die konstruktive Ausbildung der Kupplung B als innere der beiden Kupplungen unverändert von Fig. 3 übernommen. Im Unterschied zu Fig. 3 ist die Betätigungsrichtung beider Servoeinrichtungen 210, 510 beim Schließen des jeweiligen Lamellenpaketes 200 bzw. 500 nunmehr gleich, die Servoeinrichtung 510 betätigt die Lamellen 500 nunmehr also ebenfalls axial in Richtung des ersten Planetenradsatzes RS1. Hierzu sind jeweils die Servoeinrichtungen 510, 210 sowie die Lamellenpakete 500, 200 räumlich gesehen zumindest weitgehend radial übereinander angeordnet. Entsprechend ist auch die konstruktive Ausgestaltung des Lamellenträgers ZYLBE gegenüber Fig. 3 hinsichtlich des Druckraums bzw. Kolbenraums der Servoeinrichtung 510 leicht modifiziert, da dieser Druck- bzw. Kolbenraum jetzt auf der dem zweiten Planetenradsatz RS2 zugewandten Seite des Lamellenpaketes 500 angeordnet ist.

Wie in Fig. 5 weiterhin ersichtlich, ist die Bremse A nunmehr auf der dem dritten Planetenradsatz RS3 abgewandten Seite des ersten Stirnrades STR1 der Stirnradstufe STST angeordnet. Entsprechend grenzt das erste Stirnrad STR1 nunmehr axial unmittelbar an den dritten Planetenradsatz RS3 an auf dessen dem zweiten Planetenradsatz RS2 abgewandten Seite. Dabei ist eine Nabe STN1 des ersten Stirnrades STR1 an einer Gehäusezwischenwand GZ, die auf der planetenradsatzabgewandten Seite des Stirnrades STR1 angeordnet und mit dem Getriebegehäuse GG in geeigneter Weise verbunden ist, gelagert. Im dargestellten Beispiel erfolgt diese Verbindung zum Getriebegehäuse über eine Gehäusewand GW, die gleichzeitig eine stirnseitige Außenwand des Getriebegehäuses bildet. Im Prinzip kann die Gehäusezwischenwand GZ hier also als eine Art Lagerplatte für die Lagerung der Stirnradnabe STN1 verstanden werden.

Die Bremse A (mit Lamellenpaket 100 und Servoeinrichtung 110) ist räumlich gesehen axial zwischen der Gehäusezwischenwand GZ und der Gehäusewand GW angeordnet. Beispielhaft grenzt das Lamellenpaket 100 der Bremse A axial an die Gehäusewand GW an und die Servoeinrichtung 110 der Bremse A axial an die Gehäusezwischenwand GZ. In diesem Beispiel sind Druck- bzw. Kolbenraum, Kolben und Rückstellelement der Servoeinrichtung 110 in die Gehäusezwischenwand GZ integriert. Bei entsprechender Druckbeaufschlagung betätigt der Kolben der Servoeinrichtung 110 die Lamellen 100 axial in zum Stirnrad STR1 bzw. in zu den Planetenradsätzen entgegengesetzter Richtung.

In einer anderen Ausgestaltung kann beispielsweise auch vorgesehen sein, daß das Lamellenpaket 100 und die diesem zugeordnete Servoeinrichtung 110 in axialer Richtung gesehen andersherum angeordnet sind, die Servoeinrichtung 110 dann also auf der dem Stirnrad STR1 abewandten Seite des Lamellenpaketes 100 angeordnet ist zur Betätigung der Bremse A dann axial in Richtung des Stirnrades STR1 bzw. der Planetenradsätze. Zweckmäßigerweise sind in diesem Fall Druck- bzw. Kolbenraum, Kolben und Rückstellelement der Servoeinrichtung 110 in die Gehäuse-(Außen-)wand GW integriert.

Zur kinematischen Anbindung des als Innenlamellenträger ausgebildeten Eingangselementes 120 der Bremse A an das Sonnenrad SO3 des dritten Planetenradsatzes RS3 ist eine Sonnenwelle SOW3 vorgesehen, welche sich koaxial zur Antriebswelle AN ausgehend von dem Sonnenrad SO3 bis zu diesem Innenlamellenträger (120) erstreckt, dabei das erste Stirnrad STR1 der Stirnradstufe STST und die Gehäusezwischenwand GZ in axialer Richtung zentrisch durchgreift, und auf der Antriebswelle AN gelagert ist.

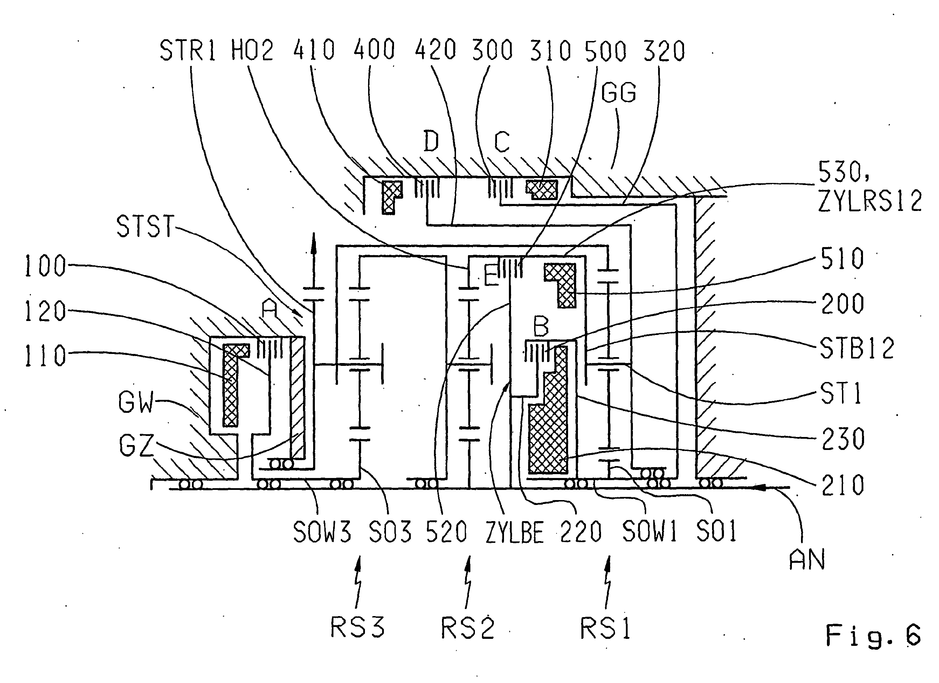

Fig. 6 zeigt nun eine vierte schematische Bauteilanordnung als beispielhafte erfindungsgemäße Lösung der Aufgabe. Die hauptsächlichen Modifikationen gegenüber den zuvor beschriebenen Bauteilanordnungen gemäß Fig. 3 bis Fig. 5 betreffen die konstruktive Ausgestaltung der Baugruppe mit den beiden Kupplungen B, E und die konstruktive Ausgestaltung der Baugruppe mit der Bremse A auf der den Planetenradsätzen abgewandten Seite der Stirnradstufe STST.

Wie in Fig. 6 ersichtlich, umfaßt die Baugruppe der beiden Kupplungen B, E einen Lamellenträger ZYLBE als gemeinsamen Innenlamellenträger und Eingangselement 220 bzw. 520 für beide Kupplungen B und E, je einen Außenlamellenträger als Ausgangselement 230 bzw. 530 für die Kupplungen B und E, ein radial inneres Lamellenpaket 200 mit zugeordneter Servoeinrichtung 210 der Kupplung B, sowie ein radial äußeres Lamellenpaket 500 mit zugeordneter Servoeinrichtung 510 der Kupplung E. Wie in Fig. 6 angedeutet, sind die Außenlamellen beider Lamellenpakete 200, 500 hierbei vorzugsweise als Stahllamellen ausgeführt, die Innenlamellen beider Lamellenpakete 200, 500 entsprechend als Belaglamellen.

Als gemeinsames Eingangselement (220, 520) für beide Kupplungen B, E ist der Lamellenträger ZYLBE mit der Antriebswelle AN verbunden und erstreckt sich in radialer Richtung parallel zum zweiten Planetenradsatz RS2, axial unmittelbar angrenzend an diesen.

Der radial äußere Außenlamellenträger der Kupplung E als deren Ausgangselement 530 ist als ein Zylinder ZYLRS12 ausgebildet, der sich axial von dem (dem zweiten Planetenradsatz RS2 zugewandten) Stegblech STB12 des Stegs ST1 des ersten Planetenradsatzes RS1 bis zu dem Hohlrad HO2 des zweiten Planetenradsatzes RS2 erstreckt, mit diesem Stegblech STB12 und diesem Hohlrad HO2 wirkverbunden ist, und der an seinem Zylinder-Innendurchmesser ein geeignetes Mitnahmeprofil aufweist zur Aufnahme der Außenlamellen des Lamellenpaketes 500 der Kupplung E. Innerhalb dieses Zylinders ZYLRS12 ist auch die Servoeinrichtung 510 der Kupplung E angeordnet, räumlich gesehen axial zwischen dem Lamellenpaket 500 und dem Stegblech STB12, zur Betätigung des Lamellenpaketes 500 axial in Richtung des zweiten Planetenradsatzes RS2. Da die Servoeinrichtung 510 stets mit einer Drehzahl des Stegs ST1 des ersten Planetenradsatzes RS1 rotiert, kann es zweckmäßig sein, daß die Servoeinrichtung 510 zusätzlich auch einen dynamischen Druckausgleich aufweist. Die Druckmittelzuführung zu dem Druckraum der Servoeinrichtung 510 (und gegebenenfalls die Schmiermittelzuführung zu einem Druckausgleichsraum des dynamischen Druckausgleichs) kann beispielsweise über den Steg ST1 des ersten Planetenradsatzes RS1, die Sonnenwelle SOW1 und die Antriebswelle AN zugeleitet werden.

Der radial innere Außenlamellenträger der Kupplung B als deren Ausgangselement 230 ist als ein in Richtung des zweiten Planetenradsatzes RS2 hin geöffneter Topf ausgebildet, mit einem scheibenförmigen Topfboden, der an seinem Innendurchmesser mit der auf der Antriebswelle AN gelagerten und mit dem Sonnenrad SO1 des ersten Planetenradsatze RS1 verbunden Sonnenwelle SOW1 verbunden ist, sowie mit einem zylindrischen Abschnitt, der sich an den Außendurchmesser dieses Topfbodens anschließt, sich axial in Richtung des zweiten Planetenradsatzes RS2 erstreckt und an seinem Innendurchmesser ein geeignetes Mitnahmeprofil aufweist zur Aufnahme der Außenlamellen des Lamellenpaketes 200 der Kupplung B. Innerhalb des Zylinderraumes dieses Außenlamellenträgers (230) ist auch die Servoeinrichtung 210 der Kupplung B angeordnet, räumlich gesehen axial zwischen dem Lamellenpaket 200 und dem Topfboden, zur Betätigung des Lamellenpaketes 200 axial in Richtung des zweiten Planetenradsatzes RS2. Die Servoeinrichtung 210 kann auch einen dynamischen Druckausgleich aufweisen. Die Druckmittelzuführung zu dem Druckraum der Servoeinrichtung 210 (und gegebenenfalls die Schmiermittelzuführung zu einem Druckausgleichsraum des dynamischen Druckausgleichs) kann beispielsweise über die Sonnenwelle SOW1 und die Antriebswelle AN zugeleitet werden.

Bedingt durch diese Anordnung der Servoeinrichtungen 210 und 510 weist der Lamellenträger ZYLBE im Vergleich zu den zuvor beschriebenen erfindungsgemäßen Ausführungsformen eine relativ geringe axiale Erstreckung auf.

Wie in Fig. 6 weiterhin ersichtlich, ist die Bremse A wie in Fig. 5 auf der dem dritten Planetenradsatz RS3 abgewandten Seite des ersten Stirnrades STR1 der Stirnradstufe STST angeordnet. Wie bereits im Rahmen der Beschreibung von Fig. 5 als Variationsmöglichkeit angedeutet, grenzt nunmehr das Lamellenpaket 100 axial an die Gehäusezwischenwand GZ, an der das Stirnrad STR1 gelagert ist, an. Die Servoeinrichtung 110 der Bremse A ist nunmehr auf der dem Stirnrad STR1 abgewandten Seite des Lamellenpaketes 100 angeordnet und betätigt das Lamellenpaket 100 beim Schließen axial in Richtung des Stirnrades STR1 bzw. des Planetenradsatzes RS3. Druck- bzw. Kolbenraum mit Druckmittelzuführung, Kolben und Rückstellelement der Servoeinrichtung 110 sind dabei ebenso in die Gehäuse-(Außen-) wand GW integriert wie auch ein geeignetes Mitnahmeprofil zur Aufnahme der Außenlamellen des Lamellenpaketes 100. Auf diese Weise ist eine fertigungstechnisch besonders einfache Vormontage der Bremse A als Baugruppe möglich. Zur kinematischen Anbindung der Bremse A an den dritten Planetenradsatz RS3 ist ähnlich wie in Fig. 5 eine auf der Antriebswelle AN gelagerte Sonnenwelle SOW3 vorgesehen, welche das als Innenlamellenträger ausgebildete Eingangselement 120 der Bremse A mit dem Sonnenrad SO3 des dritten Planetenradsatzes RS3 verbindet.

Wie in Fig. 6 weiterhin ersichtlich, ist die räumliche Anordnung der beiden weiteren Bremsen C und D mit ihren Lamellenpaketen 300 und 400 und den diesen zugeordneten Servoeinrichtungen 310 und 410 weitgehend aus Fig. 4 übernommen.

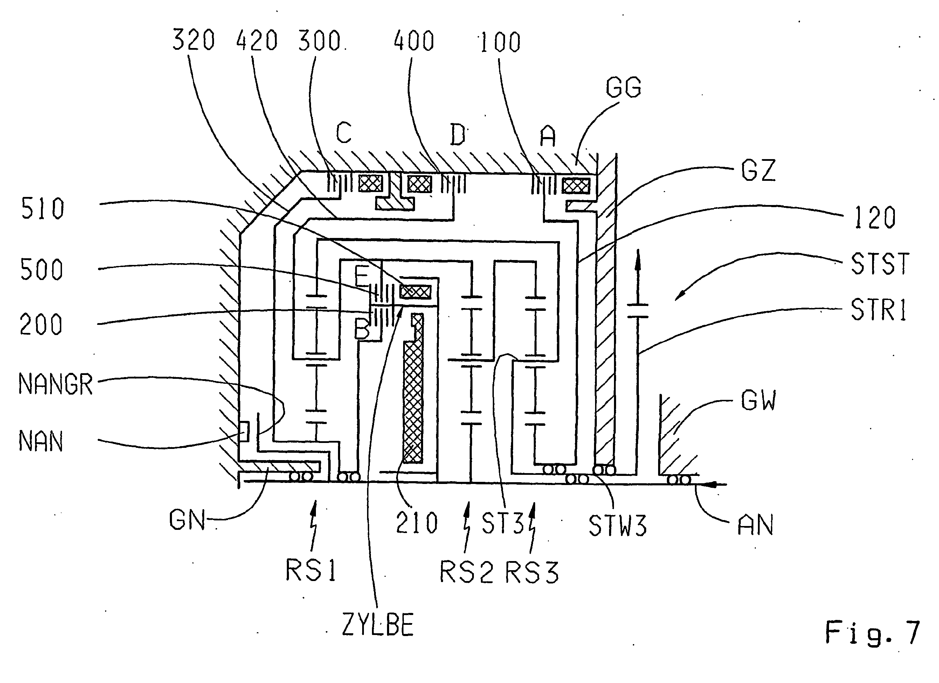

Fig. 7 zeigt nun eine fünfte schematische Bauteilanordnung als beispielhafte erfindungsgemäße Lösung der Aufgabe, basierend auf der ersten Bauteilanordnung gemäß Fig. 3 und der dritten Bauteilanordnung gemäß Fig. 5. Die Modifikationen gegenüber der ersten Bauteilanordnung gemäß Fig. 3 betreffen im wesentlichen die konstruktive Ausgestaltung der Baugruppe der beiden Kupplungen B und E, sowie die räumliche Lage der Bremsen C und D relativ zu den Planetenradsätzen.

Ungeachtet der gespiegelten Darstellung des Getriebes ist in Fig. 7 leicht ersichtlich, daß die Baugruppe der beiden Kupplungen B, E (mit Lamellenträger ZYLBE, den Lamellenpaketen 200 und 500, sowie den Servoeinrichtungen 210 und 510) aus Fig. 5 übernommen wurde.

Wie in Fig. 7 weiterhin ersichtlich, wurden die beiden benachbarten Bremsen C und D gegenüber Fig. 3 in axialer Richtung verschoben, sodaß jetzt die Bremse C räumlich gesehen in einem Bereich radial über dem ersten Planetenradsatz RS1 angeordnet ist und die zur Bremse C benachbarte Bremse D in einem Bereich radial über der Kupplung E. Angedeutet ist auch eine Abschrägung des Getriebegehäuses GG im Bereich des Gehäuse-Außendurchmessers auf der dem Stirntrieb gegenüberliegenden Seite des Automatgetriebes. Eine derartige Abschrägung kann beispielsweise aufgrund eines real vorhandenen Getriebeeinbauraums notwendig sein. Die Innenlamellenträger (320, 420) beider Bremsen C, D sind von ihrer Struktur her der Abschrägung des Getriebegehäuses GG angepaßt.

Als weitere Detailmodifikation ist in Fig. 7 eine geänderte Lagerung des ersten Stirnrades STR1 der Stirnradstufe STST dargestellt. Axial zwischen dem als Innenlamellenträger ausgebildeten Eingangselement 120 der Bremse A und der Stirnradstufe STST ist nunmehr eine über geeignete Mittel mit den Getriebegehäuse GG verbundene Gehäusezwischenwand GZ vorgesehen, die sich radial vom Getriebegehäuse-Außendurchmesser radial nach innen erstreckt bis zu der Stegwelle STW3, über welche der Steg ST3 des dritten Planetenradsatzes RS3 mit dem ersten Stirnrad STR1 der Stirnradstufe STST verbunden ist. Dabei ist die Stegwelle STW3 beispielhaft auf der Antriebswelle AN gelagert. Im Unterschied zu Fig. 3 ist das ersten Stirnrad STR1 nunmehr an der Gehäusezwischenwand GZ gelagert und nicht an der Außen-Stirnwand GW des Getriebegehäuses.

Als zusätzliches Detail eingezeichnet ist in Fig. 7 eine Vorrichtung zur Messung einer Drehzahl der Antriebswelle AN. Der entsprechende Antriebsdrehzahlsensor ist mit NAN bezeichnet, an einer Außen-Stirnwand des Getriebegehäuses GG angeordnet und daher auch von außen her leicht zugänglich, hier beispielhaft auf der der Stirnradstufe STST gegenüberliegenden Getriebeseite. Entsprechend der beispielhaften Ausführung als axial abtastender Sensor ist dieser Antriebsdrehzahlsensor NAN räumlich gesehen im Bereich einer getriebegehäusefesten Nabe GN angeordnet und tastet ein mit der Antriebswelle AN verdrehfest verbundenes Geberrad NANGR ab, beispielsweise mittels induktivem oder Hall-Meßprinzip.

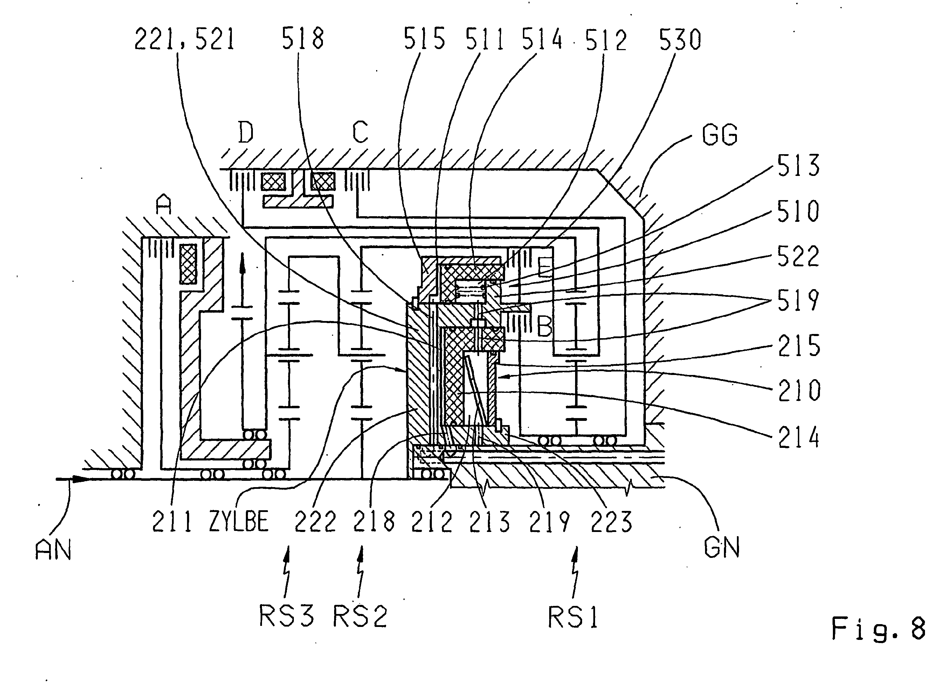

Fig. 8 zeigt nun eine sechste schematische Bauteilanordnung als beispielhafte erfindungsgemäße Lösung der Aufgabe. Dabei geht diese sechste erfindungsgemäße Bauteilanordnung von der zuvor schon erläuterten dritten schematischen Bauteilanordnung gemäß Fig. 5 aus und betrifft primär die Anordnung und Ausgestaltung der Druckräume und Druckausgleichsräume beider Servoeinrichtungen der Baugruppe mit den beiden Kupplungen B und E.

Wie in Fig. 8 ersichtlich, ist unverändert für beide Kupplungen B und E ein gemeinsamer Lamellenträger ZYLBE vorgesehen, der für die Kupplung B den Außenlamellenträger und für die Kupplung E den Innenlamellenträger bildet. Unverändert sind beide Lamellenpakete 200, 500 der Kupplungen B, E auf der dem ersten Planetenradsatz RS1 zugewandten Seite des Lamellenträgers ZYLBE angeordnet und werden von der jeweiligen Servoeinrichtung 210 bzw. 510 der Kupplung B bzw. E beim Kupplungsschließen axial in Richtung des Planetenradsatzes RS1 hin betätigt, wobei das Lamellenpaket 500 räumlich gesehen radial über dem Lamellenpaket 200 angeordnet ist. Beide Servoeinrichtungen 210, 510 weisen jeweils einen dynamischen Druckausgleich auf.

Geometrisch ist der für die Kupplungen B, E gemeinsame Lamellenträger ZYLBE in die Abschnitte 223, 222, 221, 521, und 522 unterteilt. Die Nabe 223, der scheibenförmige Abschnitt 222 und der zylindrische Abschnitt 221 sind dem Eingangselement der radial inneren Kupplung B zuzuordnen, der zylindrische Abschnitt 521 und der scheibenförmige Abschnitt 522 dem Eingangselement der radial äußeren Kupplung E. Dies wird auch durch die gewählte Nomenklatur verdeutlicht.

Die Nabe 223 des Lamellenträgers ZYLBE ist mit der Antriebswelle AN über eine geeignete Wirkverbindung verbunden, beispielsweise über ein Mitnahmeprofil. In dem in Fig. 8 dargestellten Beispiel ist die Nabe 223 auch an einer getriebegehäusefesten Nabe GN gelagert, welche sich - ausgehend von der auf der kupplungsabgewandten Seite des ersten Planetenradsatz RS1 angeordneten Außen-Stirnwand des Getriebegehäuses GG - axial bis unter den Lamellenträger ZYLBE erstreckt (und dabei den ersten Planetenradsatz RS1 zentrisch durchgreift und zentrisch in einen Innendurchmesser der Nabe 223 des Lamellentägers ZYLBE in axialer Richtung eintaucht).

Auf der Seite der Nabe 223, die dem Planetenradsatz RS1 abgewandt ist, schließt sich der scheibenförmige Abschnitt 222 an die Nabe 223 an und erstreckt sich radial nach außen bis auf einen Durchmesser, der etwas größer ist als der Außendurchmesser des Lamellenpaketes 200 der (radial inneren) Kupplung B entspricht. Der zylindrische Abschnitt 221 schließt sich am Außendurchmesser des scheibenförmigen Abschnitts 222 an diesen an und erstreckt sich in axialer Richtung bis über das Lamellenpaket 200 der Kupplung B, relativ nah an den ersten Planetenradsatz RS1 heran. Im Bereich nahe dem benachbarten ersten Planetenradsatz RS1 weist der zylindrische Abschnitt 221 an seinem Innendurchmesser ein Mitnahmeprofil auf zur Aufnahme der Außenlamellen des Lamellenpaketes 200. Wie in Fig. 8 angedeutet, sind diese Außenlamellen vorzugsweise als Stahllamellen ausgebildet. Der zylindrische Abschnitt 221 und der scheibenförmige Abschnitts 222 des Lamellenträgers ZYLBE bilden einen Kupplungsraum, innerhalb dessen die Lamellen 200 und die Servoeinrichtung 210 der Kupplung B angeordnet sind, radial oberhalb der Nabe 223 des Lamellenträgers ZYLBE. Die Servoeinrichtung 210 umfaßt einen Druckraum 211, einen Kolben 214, ein hier beispielhaft als Tellerfeder ausgeführtes Rückstellelement 213, einen Druckausgleichraum 212 und eine Stauscheibe 215. Der Druckraum 211 wird dabei durch die Abschnitte 221; 222 und 223 des Lamellenträgers ZYLBE und den Kolben 214 gebildet, der Druckausgleichsraum 212 des dynamischen Druckausgleichs der Kupplung B durch den Kolben 214 und die Stauscheibe 215. Der Druckausgleichsraum 212 der Servoeinrichtung 210 ist also näher am ersten Planetenradsatz RS1 angeordnet als der Druckraum 211 der Servoeinrichtung 210.

Eine mit 218 bezeichnete Druckmittelzuführung zum Druckraum 211 der Servoeinrichtung 210 der radial inneren Kupplung E verläuft hier beispielhaft als schräge Radialbohrung durch die Nabe 223 des Lamellenträgers ZYLBE. Dieser Radialbohrung 218 zugeleitet wird das zum Betätigen der Kupplung B erforderliche Druckmittel hier beispielhaft über die getriebegehäusefeste Nabe GN, an der die Nabe 223 des Lamellenträgers ZYLBE wie bereits erwähnt gelagert ist, wobei die getriebegehäusefeste Nabe GN entsprechend ausgeführte Druckmittelkanäle aufweist. In einer anderen Ausgestaltung kann das Druckmittel dem Druckraum 211 der Servoeinrichtung 210 auch über entsprechende Axial- und Radialbohrungen der Antriebswelle AN zugeführt werden.

Eine mit 219 bezeichnete Schmiermittelzuführung zum Druckausgleichsraum 212 der Servoeinrichtung 210 der radial inneren Kupplung E verläuft hier beispielhaft als gerade Radialbohrung ebenfalls durch die Nabe 223 des Lamellenträgers ZYLBE. Dieser Radialbohrung 219 zugeleitet wird das zum drucklosen Befüllen des Druckausgleichsraumes 212 benötigte Schmiermittel hier ebenfalls über die getriebegehäusefeste Nabe GN.

Der (der radial äußeren Kupplung E zugeordnete) zylindrische Abschnitt 521 des Lamellenträgers ZYLBE entspricht im Prinzip dem (der radial inneren Kupplung B zugeordneten) zylindrischen Abschnitt 221. An seiner dem ersten Planetenradsatz RS1 zugewandten Seite weist der zylindrische Abschnitt 521 an seinem Außendurchmesser ein Mitnahmeprofil auf zur Aufnahme der Innenlamellen des Lamellenpaketes 200 der Kupplung B. Wie in Fig. 8 angedeutet, sind diese Innenlamellen vorzugsweise als Belaglamellen ausgebildet. Axial neben diesem Lamellenmitnahmeprofil, auf der dem Planetenradsatz RS1 zugewandten Seite des Lamellenmitnahmeprofils, schließt sich der scheibenförmige Abschnitt 522 des Lamellenträgers ZYLBE an den zylindrischen Abschnitt 521 an und erstreckt sich - ausgehend vom Außendurchmesser des zylindrischen Abschnitts 521 - radial nach außen bis auf eine Durchmesser, der vorzugsweise kleiner ist als der mittlere Durchmesser der Außenlamellen des Lamellenpaketes 500 der radial äußeren Kupplung E.

Die Servoeinrichtung 510 der (radial äußeren) Kupplung E ist räumlich gesehen radial über dem zylindrischen Abschnitt 521 des Lamellenträgers ZYLBE angeordnet. Zur Bildung eines Kolben- bzw. Druckraumes 511 sowie eines Druckausgleichsraumes 512 dieser Servoeinrichtung 510 ist eine zylinderförmige Stützscheibe 515 vorgesehen, die räumlich gesehen radial oberhalb des zylindrischen Abschnitts 521 des Lamellenträgers ZYLBE angeordnet ist. Dabei weist diese Stützscheibe 515 einen scheibenförmigen Abschnitt auf, dessen Innendurchmesser im Bereich des dem zweiten Planetenradsatz RS2 zugewandten axial äußeren Randes des zylindrischen Abschnitts 521 auf diesen zylindrischen Abschnitts 521 des Lamellenträgers ZYLBE aufgeschoben ist, axial in diesem Bereich an dem zylindrischen Abschnitts 521 gesichert ist und hierbei auch zu dem zylindrischen Abschnitts 521 hin druckmitteldicht abgedichtet ist. Am Außendurchmesser des scheibenförmigen Abschnittes der Stützscheibe 515 schließt sich ein zylindrischer Abschnitt an, der sich axial in Richtung des Lamellenpaketes 500 bzw. axial in Richtung des ersten Planetenradsatzes RS1 erstreckt. Die zylinderförmige Stützscheibe 515 und der zylindrische Abschnitt 521 des Lamellenträgers ZYLBE bilden den Kolben- bzw. Druckraum 511 der Servoeinrichtung 510, innerhalb dessen ein Kolben 514 der Servoeinrichtung 510 axial verschiebbar angeordnet ist. Der Kolben 514 ist dabei gegenüber dem zylindrischen Abschnitt der Stützscheibe 515 sowie gegenüber dem zylindrischen Abschnitt 521 des Lamellenträgers ZYLBE axial verschiebbar druckmitteldicht abgedichtet. Der Kolben 514 der Servoeinrichtung 510 ist - ähnlich wie die Stützscheibe 515 - als in Richtung zum Lamellenpaket 500 hin geöffneter Zylinder ausgebildet, wobei der Zylinderboden die Trennfläche zum Druckraum 511 bildet. Der zylindrische Mantel des Kolbens 514 übergreift den scheibenförmigen Abschnitt 522 des Lamellenträgers ZYLBE und erstreckt sich in axialer Richtung bis zu dem Lamellenpaket 500 der Kupplung E. Zwischen dem Zylinderboden des Kolbens 514 und dem scheibenförmigen Abschnitt 522 des Lamellenträgers ZYLBE ist ein Rückstellelement 513 der Servoeinrichtung 510 eingespannt, hier beispielhaft als ringförmiges Paket mit parallelgeschalteten Schraubenfedern.

Eine mit 518 bezeichnete Druckmittelzuführung zum Druckraum 511 der Servoeinrichtung 510 der radial äußeren Kupplung E verläuft abschnittsweise als Radialbohrung durch den scheibenförmigen Abschnitt 222 und die Nabe 223 des Lamellenträgers ZYLBE. Das Druckmittel zum Betätigen der Kupplung E kann beispielsweise von der Antriebswelle AN her zugeleitet werden, wobei die Antriebswelle AN dann entsprechende Radial- und Axialbohrungen aufweist. Alternativ dazu kann Das Druckmittel zum Betätigen der Kupplung E dieser Radialbohrung 518 aber auch über die getriebegehäusefeste Nabe GN, an der hier der Lamellenträger ZYLBE und die Antriebswelle AN gelagert sind, zugeleitet werden, wobei die Nabe GN dann entsprechend ausgeführte Druckmittelkanäle aufweist.

Zur Bildung eines Druckausgleichsraumes 512 für den dynamischen Druckausgleich der Servoeinrichtung 510 ist der zylindrische Mantel des Kolbens 514 gegenüber dem scheibenförmigen Abschnitt 522 des Lamellenträgers ZYLBE axial verschiebbar schmiermitteldicht abgedichtet. Entsprechend wird der Druckausgleichsraum 512 durch den scheibenförmigen Abschnitt 522 und den zylindrischen Abschnitt 521 des Lamellenträgers ZYLBE und den Kolben 514 gebildet.

Mit Schmiermittel drucklos befüllt wird dieser. Druckausgleichsraum 512 der radial äußeren Kupplung E von dem Druckausgleichsraum 212 der radial inneren Kupplung B aus. Hierzu sind sowohl in dem zylindrischen Abschnitt 521 (bzw. 221) des Lamellenträgers ZYLBE als auch in dem Kolben 214 der Servoeinrichtung 210 der Kupplung B Radialbohrungen vorgesehen, die in dem Druckausgleichsraum 212 bzw. im Druckausgleichsraum 512 münden. Die entsprechende Schmiermittelzuführung ist mit 519 bezeichnet.

Aus Fig. 8 ist also ersichtlich, daß die Servoeinrichtung 510 der Kupplung E räumlich gesehen also radial über der Servoeinrichtung 210 der Kupplung B angeordnet ist, wobei jeweils die beiden Druckräume 211 und 511, jeweils die beiden Druckausgleichsräume 212 und 512 und jeweils auch die Rückstelleinrichtungen 213 und 513 räumlich gesehen in etwa radial übereinander angeordnet sind. Der Abschnitt der Mantelfläche des für beide Kupplungen B, E gemeinsamen Lamellenträgers ZYLBE, welcher die beiden Druckräume 211, 511 bzw. die beiden Druckausgleichsräume 212, 512 voneinander trennt, ist also im Prinzip der zylindrische Abschnitt 221 (bzw. 521) des für beide Kupplungen B, E gemeinsamen Lamellenträgers ZYLBE.

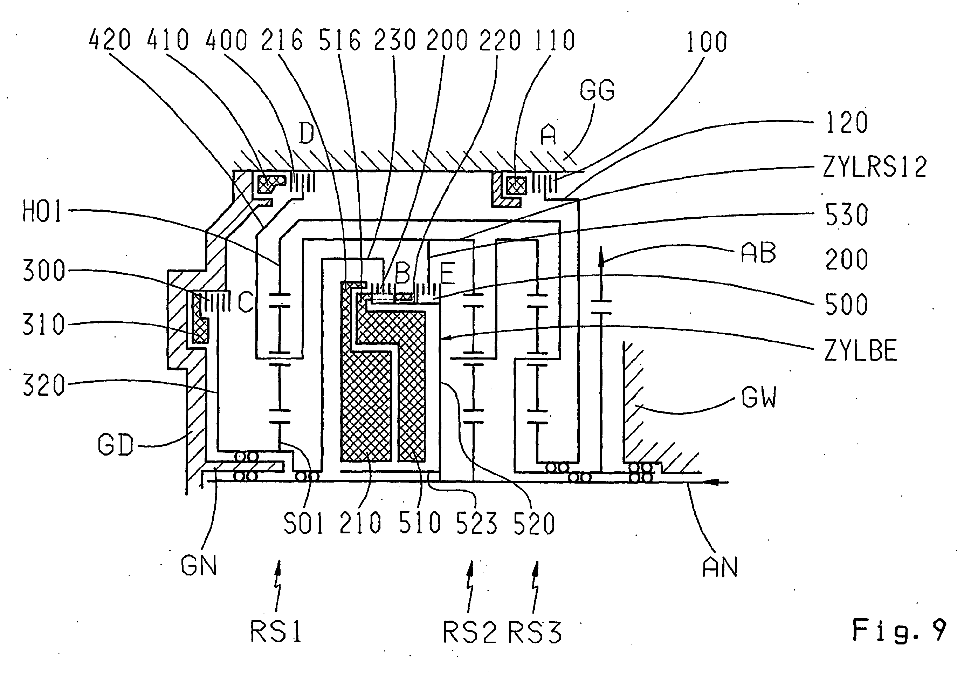

Anhand der Figuren 9 bis 11 werden im folgenden drei weitere erfindungsgemäße Bauteilanordnungen näher erläutert, bei denen - im Unterschied zu den zuvor beschriebenen sechs erfindungsgemäßen Bauteilanordnungen - die axial zwischen dem ersten Planetenradsatz RS1 und dem zweiten Planetenradsatz RS2 angeordnete Baugruppe der beiden Kupplungen B, E nunmehr axial nebeneinander angeordnete Lamellenpakete 200, 500 aufweist. Infolge dieser Anordnung können in vorteilhafter Weise beide Lamellenpakete 200, 500 einen vergleichsweise großen Durchmesser aufweisen, entsprechend ihrer hohen thermischen Belastung. Hinsichtlich der konstruktiven Ausgestaltung dieser Baugruppe wird auch auf die unveröffentlichte, mit gleichem Anmeldedatum wie die vorliegende Anmeldung eingereichte Deutsche Patentanmeldung der Anmelderin mit internem Aktenzeichen ZF 8818 S hingewiesen, deren Beschreibungsinhalt ausdrücklich ebenfalls Gegenstand der vorliegenden Anmeldung sein soll.

Fig. 9 zeigt nun eine siebte schematische Bauteilanordnung als beispielhafte erfindungsgemäße Lösung der Aufgabe, aufbauend auf der ersten erfindungsgemäßen Bauteilanordnung gemäß Fig. 3. Wie bereits erwähnt, bilden die beiden Kupplungen B, E eine Baugruppe mit nunmehr axial nebeneinander angeordneten Lamellenpaketen 200 und 500, wobei diese Baugruppe unverändert räumlich gesehen axial zwischen den beiden Planetenradsätzen RS1 und RS2 angeordnet ist.

Ähnlich wie in Fig. 3, ist auch gemäß Fig. 9 ein für beide Kupplungen B, E gemeinsamer Lamellenträger ZYLBE vorgesehen, der als in Richtung des ersten Planetenradsatzes RS1 hin geöffneter Topf ausgebildet und mit der Antriebswelle AN verbunden ist. Im Unterschied zu Fig. 3 bildet der Lamellenträger ZYLBE nunmehr den Innenlamellenträger für beide Kupplungen B und E und weist hierzu an seinem Außendurchmesser ein geeignetes Mitnahmeprofil auf zur Aufnahme der Innenlamellen beider Lamellenpakete 200 und 500. Wie in Fig. 9 angedeutet, sind diese Innenlamellen dabei vorzugsweise als Stahllamellen ausgeführt und die Außenlamellen der Lamellenpakete 200 und 500 entsprechend als Belaglamellen. Das Lamellenpaket 500 der Kupplung E ist nahe dem zweiten Planetenradsatz RS2 angeordnet, das Lamellenpaket 200 der Kupplung B entsprechend auf der dem zweiten Planetenradsatz RS2 gegenüberliegenden Seite des Lamellenpaketes 500 nahe dem ersten Planetenradsatz RS1. Der scheibenförmige Topfboden des Lamellenträgers ZYLBE und der sich am Außendurchmesser dieses Topfbodens anschließende erste zylindrische Abschnitt mit dem Lamellenmitnahmeprofil für die Innenlamellen der Kupplung E kann als Eingangselement 520 der Kupplung E verstanden werden. Entsprechend kann der zweite zylindrische Abschnitt mit dem Lamellenmitnahmeprofil für die Innenlamellen der Kupplung B, der sich an den genannten ersten zylindrischen Abschnitt mit dem Lamellenmitnahmeprofil für die Innenlamellen der Kupplung E axial in Richtung des ersten Planetenradsatzes RS1 anschließt, als Eingangselement 220 der Kupplung B verstanden werden. Das Eingangselement 220 der Kupplung B ist demnach über das Eingangselement 520 der Kupplung E mit der Antriebswelle AN verbunden.

Wie in Fig. 9 ersichtlich, weist der für beide Kupplungen B, E gemeinsame Lamellenträger ZYLBE im Durchmesserbereich der Antriebswelle AN beispielhaft eine zylindrische Nabe 523 auf, die über geeignete Mittel mit der Antriebswelle AN zumindest verdrehfest verbunden ist. Diese Nabe 523 erstreckt sich ausgehend von dem scheibenförmigen Topfboden des Lamellenträgers ZYLBE axial in Richtung des ersten Planetenradsatzes RS1. Räumlich gesehen radial oberhalb dieser Nabe 523 sind die Servoeinrichtungen 510, 210 beider Kupplungen E, B angeordnet, wobei überwiegende Teile dieser beiden Servoeinrichtungen 510, 210 auch innerhalb des durch die Lamellenmitnahmeprofile des Lamellenträgers ZYLBE gebildeten Zylinderraums angeordnet sind. Dabei ist die Servoeinrichtung 510 der Kupplung E näher am zweiten Planetenradsatz RS2 angeordnet als die Servoeinrichtung 210 der Kupplung B und grenzt sowohl axial unmittelbar an den scheibenförmigen Topfboden des Lamellenträgers ZYLBE an als auch radial an den zylindrischen Abschnitt des Lamellenträgers ZYLBE unterhalb dessen Lamellenmitnahmeprofilen. Zur Betätigung des Lamellenpaketes 500 axial in Richtung des zweiten Planetenradsatzes RS2 weist die Servoeinrichtung 510 vorzugsweise mindestens drei Betätigungsfinger 516 auf, die den zylindrischen Abschnitt des Lamellenträgers ZYLBE mit dem Lamellenmitnahmeprofil für die Innenlamellen des Lamellenpaketes 200 in axialer und radialer Richtung umgreifen, dabei das Lamellenpaket 200 oder das diesem Lamellenpaket 200 zugeordnete Lamellenmitnahmeprofil des Lamellenträgers ZYLBE in axialer Richtung vollständig durchgreifen und auf das Lamellenpaket 500 von der dem zweiten Planetenradsatzes RS2 gegenüberliegenden Seite des Lamellenpaketes 500 aus wirken.

Entsprechend ist die Servoeinrichtung 210 der Kupplung B räumlich gesehen neben der Servoeinrichtung 510 der Kupplung E angeordnet, auf dem ersten Planetenradsatz RS1 zugewandten Seite dieser Servoeinrichtung 510. Zur Betätigung des Lamellenpaketes 200 axial in Richtung des zweiten Planetenradsatzes RS2 weist die Servoeinrichtung 210 einen ringförmigen Andruckteller 216 auf, welche die Betätigungsfinger 516 der Servoeinrichtung 510 in radialer Richtung vollständig und in axialer Richtung teilweise umgreift und auf das Lamellenpaket 200 von der dem zweiten Planetenradsatzes RS2 gegenüberliegenden Seite des Lamellenpaketes 200 aus wirkt.

Zur Einsparung von axialer Baulänge kann in einer anderen Ausgestaltung auch vorgesehen sein, daß anstelle des ringförmigen Andrucktellers 216 der Servoeinrichtung 210 einzelne Betätigungsfinger vorgesehen sind, welche räumlich gesehen axial in den Betätigungsfingern 516 der Servoeinrichtungen 210, 510 verschachtelt angeordnet sind.

Entsprechend der Ausbildung des Lamellenträgers ZYLBE als Innenlamellenträger für beide Kupplungen B, E ist sowohl das Ausgangselement 230 der Kupplung B als auch das Ausgangselement 530 der Kupplung E als Außenlamellenträger zur Aufnahme der Außenlamellen des jeweiligen Lamellenpaketes 200 bzw. 500 ausgebildet, wobei diese Außenlamellen (wie schon erwähnt) vorzugsweise jeweils als Belaglamellen ausgeführt sind. Geometrisch weist das Ausgangselement 230 der Kupplung B die Form eines in Richtung des zweiten Planetenradsatz RS2 hin geöffneten Topfes auf, mit einem zylindrischen Abschnitt, einem scheibenförmigen Topfboden und einer Nabe. Der scheibenförmige Topfboden des Ausgangselementes 230 ist axial unmittelbar zwischen dem ersten Planetenradsatz RS1 und der Servoeinrichtung 210 der Kupplung B angeordnet. Die Nabe des Ausgangselementes 230 schließt sich an den Topfboden an dessem Innendurchmesser an, erstreckt sich axial in Richtung des ersten Planetenradsatzes RS1 und ist über eine geeignete Wirkverbindung - beispielsweise mittels Schweißverbindung oder Mitnahmeprofil - mit dem Sonnenrad SO1 des ersten Planetenradsatzes RS1 verbunden. Der zylindrische Abschnitt des Ausgangselementes 230 schließt sich an den Topfboden an dessem Außendurchmesser an, erstreckt sich axial in Richtung des zweiten Planetenradsatzes RS2 bis über das Lamellenpaket 200 der Kupplung B und weist an seinem Innendurchmesser ein geeignetes Mitnahmeprofil auf zur Aufnahme der Außenlamellen dieses Lamellenpaketes 200. Die geometrische Ausbildung des Ausgangselementes 530 der Kupplung E entspricht im Prinzip der in Fig. 3 bereits erläuterten Ausbildung, wobei der Zylinder ZYLRS12 wie in Fig. 3 die Wirkverbindung zwischen dem Steg ST1 des ersten Planetenradsatzes RS1 und dem Hohlrad HO2 des zweiten Planetenradsatzes RS2 und den Außenlamellen des Lamellenpaketes 500 der Kupplung E bildet, dabei nunmehr auch den zylindrischen Außenlamellenträger (230) der Kupplung B übergreift.

Wie in Fig. 9 weiterhin ersichtlich, ist das Lamellenpaket 100 der Bremse A wie in Fig. 3 räumlich gesehen zumindest in etwa radial über dem dritten Planetenradsatz RS3 im Bereich des großen Innendurchmessers des zylindrischen Getriebegehäuses GG angeordnet. Die Servoeinrichtung 110 der Bremse A jedoch ist nunmehr räumlich gesehen in etwa radial über dem zweiten (mittleren) Planetenradsatz RS2 angeordnet und betätigt die Lamellen 100 beim Schließen der Bremse A axial in zum ersten Planetenradsatz RS1 entgegengesetzter Richtung.

Weiterhin ist in Fig. 9 die Bremse D mit ihrem Lamellenpaket 400.und ihrer Servoeinrichtung 410 beispielhaft in einem Bereich in etwa radial über dem ersten Planetenradsatz RS1 am großen Innendurchmesser des zylindrischen Getriebegehäuses GG angeordnet. Die Sevoeinrichtung 410 der Bremse D ist dabei beispielhaft in dem Gehäusedeckel GD, der die dem Abtrieb bzw. dem Stirntrieb des Getriebes gegenüberliegende Außen-Stirnfläche des Getriebes bildet und über geeignete Mittel mit dem Getriebegehäuse GG verdrehfest verbunden ist, integriert und betätigt die Lamellen 400 beim Schließen der Bremse D axial in Richtung des dritten Planetenradsatzes RS3.

Die Bremse C mit ihrem Lamellenpaket 300 und ihrer Servoeinrichtung 310 ist nunmehr axial neben dem ersten Planetenradsatz RS1 auf dessen der Kupplung B bzw. den anderen beiden Planetenradsätzen RS2, RS3 abgewandeten Seite angeordnet, unmittelbar zwischen dem ersten Planetenradsatz RS1 und dem Gehäusedeckel GD auf einem Durchmesser, der in etwa dem Hohlrad HO1 des ersten Planetenradsatzes RS1 entspricht. Dabei ist der Gehäusedeckel GD in vorteilhafter Weise als Außenlamellenträger der Bremse C zur Aufnahme der Außenlamellen des Lamellenpaketes 300 ausgebildet. Außerdem ist die Servoeinrichtung 310 der Bremse C in diesen Gehäusedeckel GD integriert und betätigt die Lamellen 300 beim Schließen der Bremse C axial in Richtung des ersten Planetenradsatzes RS1. Die Betätigungsrichtungen aller drei Bremsen C, D und A sind in diesem Ausführungsbeispiel also gleich.

Wie in Fig. 3 ist auch in Fig. 9 die Antriebswelle AN an dem Gehäusedeckel GD gelagert. Im Unterschied zu Fig. 3 weist der Gehäusedeckel GD hierzu eine gehäusedeckelfeste bzw. gehäusefeste rohrförmige Nabe GN auf, die sich in den Innenraum des Getriebegehäuses GG erstreckt. Die Antriebswelle AN ist an einem Innendurchmesser dieser Nabe GN gelagert. An einem Außendurchmesser dieser Nabe GN ist das mit dem Sonnenrad SO1 des ersten Planetenradsatzes RS1 verbundenen und als Innenlamellenträger ausgebildete Eingangselement 320 der Bremse C gelagert.

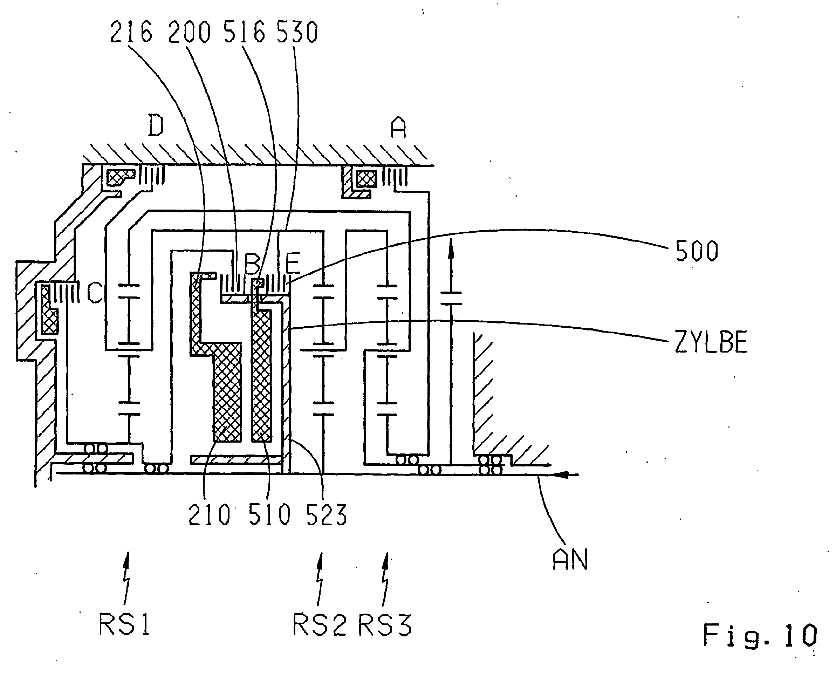

Fig. 10 zeigt nun eine achte schematische Bauteilanordnung als beispielhafte erfindungsgemäße Lösung der Aufgabe, basierend auf der zuvor anhand Fig. 9 im Detail erläuterten siebten erfindungsgemäßen Bauteilanordnung. Der Unterschied zur siebten Bauteilanordnung gemäß Fig. 9 betrifft im wesentlichen die konstruktive Ausgestaltung der Servoeinrichtung 510 der Kupplung E, bei unveränderter Betätigungsrichtung. Wie in Fig. 9 ist diese Servoeinrichtung 510 räumlich gesehen radial oberhalb der Nabe 523 des für beide Kupplungen B, E gemeinsamen Lamellenträgers ZYLBE angeordnet, axial angrenzend an den scheibenförmigen Abschnitt ("Topfboden") dieses Lamellenträgers ZYLBE. Zu weiten Teilen ist die Servoeinrichtung 510 dabei radial innerhalb des Kupplungsraumes angeordnet, der durch den zylindrischen Abschnitt des Lamellenträgers ZYLBE mit dem Lamellenmitnahmeprofil für die Innenlamellen des Lamellenpaketes 500 der Kupplung E gebildet wird. Im Unterschied zu Fig. 9 weist der Lamellenträger ZYLBE an seinem radial äußeren Zylinder räumlich gesehen in einem Bereich axial zwischen den beiden Lamellenpaketen 200 und 500 vorzugsweise mindestens drei symmetrisch am Umfang verteilte Durchbrüche auf. Jedem dieser Durchbrüche ist jeweils ein Betätigungsfinger 516 der Servoeinrichtung 510 zugeordnet. Die Durchbrüche weisen jeweils eine hinreichend große axiale Erstreckung auf, sodaß diese Betätigungsfinger 516 einerseits radial durch die Durchbrüche hindurchgreifen können und andererseits einen Axialhub zum Betätigen des Lamellenpaketes.500 beim Kupplungsschließen durchführen können. Die Betätigungsfinger 516 wirken dabei wie in Fig. 9 auf die Fläche des Lamellenpaketes 500, die dem Lamellenpaket 200 der Kupplung B bzw. dem ersten Planetenradsatz RS1 zugewandt ist.

Die Servoeinrichtung 210 der Kupplung B ist axial neben der Servoeinrichtung 510 der Kupplung E angeordnet, auf der dem ersten Planetenradsatz RS1 zugewandten Seite der Servoeinrichtung 510. Der ringförmige Andruckteller 216 der Servoeinrichtung 210 übergreift das Lamellenmitnahmeprofil des Lamellenträgers ZYLBE für die Innenlamellen des Lamellenpaketes 200 in radialer und axialer Richtung und wirken auf die Fläche des Lamellenpaketes 200, die dem ersten Planetenradsatz RS1 zugewandt ist.

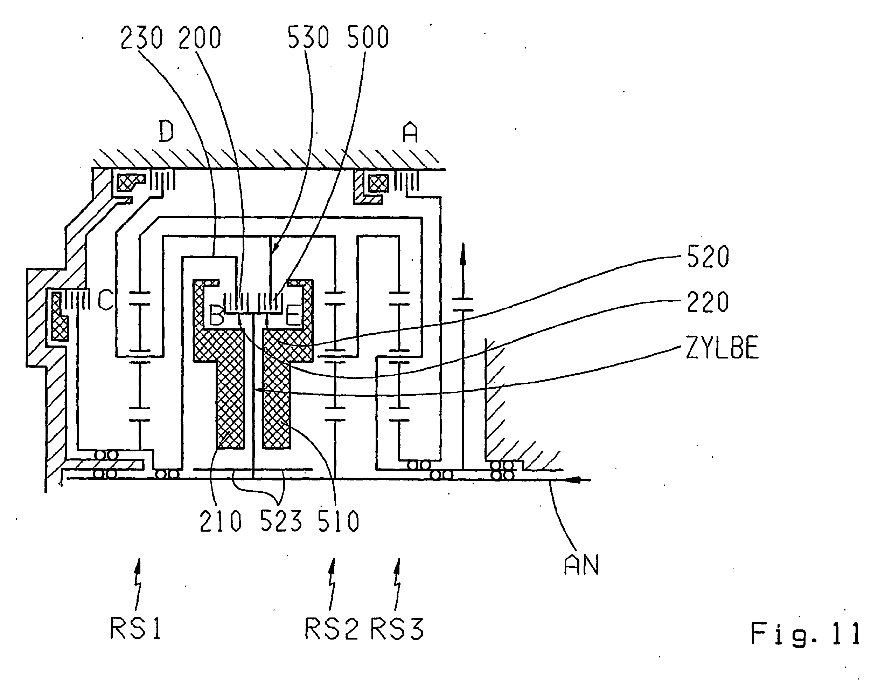

Fig. 11 zeigt nun eine neunte schematische Bauteilanordnung als beispielhafte erfindungsgemäße Lösung der Aufgabe, ebenfalls basierend auf der zuvor anhand Fig. 9 im Detail erläuterten siebten erfindungsgemäßen Bauteilanordnung. Der Unterschied zur siebten Bauteilanordnung gemäß Fig. 9 betrifft im wesentlichen die konstruktive Ausgestaltung des für die beiden Kupplungen B, E gemeinsamen Lamellenträgers ZYLBE und der Servoeinrichtung 210, 510 dieser Kupplungen B, E.

Der Lamellenträger ZYLBE ist für beide Kupplungen B und E als Innenlamellenträger ausgebildet und bildet für beide Kupplungen B, E deren Eingangselement (220, 520) und ist entsprechend der kinematischen Koppelung des Getriebeschemas mit der Antriebswelle AN verbunden. An seinem Außendurchmesser weist der Lamellenträger ZYLBE ein geeignetes Mitnahmeprofil auf zur Aufnahme der Innenlamellen beider Lamellenpakete 200 und 500, wobei diese Innenlamellen dabei vorzugsweise als Stahllamellen und die Außenlamellen der Lamellenpakete 200 und 500 entsprechend als Belaglamellen ausgeführt sind. Wie in Fig. 9 ist das Lamellenpaket 500 der Kupplung E nahe dem zweiten Planetenradsatz RS2 angeordnet, das Lamellenpaket 200 der Kupplung B entsprechend auf der dem zweiten Planetenradsatz RS2 gegenüberliegenden Seite des Lamellenpaketes 500 nahe dem ersten Planetenradsatz RS1. Der Abschnitt des zylindrischen Lamellenträgers ZYLBE mit dem Lamellenmitnahmeprofil für die Innenlamellen des Lamellenpaketes 200 ist also dem Eingangselement 220 der Kupplung B zuzuordnen, der Abschnitt des zylindrischen Lamellenträgers ZYLBE mit dem Lamellenmitnahmeprofil für die Innenlamellen des Lamellenpaketes 500 dem Eingangselement 520 der Kupplung E.

Im Unterschied zu Fig. 9 weist der zylindrische Lamellenträger ZYLBE nunmehr einen scheibenförmigen Abschnitt auf, der sich in etwa mittig unter dem zylindrischen Abschnitt des Lamellenträger ZYLBE - räumlich gesehen in etwa zwischen dem Lamellenmitnahmeprofil für die Innenlamellen des Lamellenpaketes 200 und dem Lamellenmitnahmeprofil für die Innenlamellen des Lamellenpaketes 500 - nach innen erstreckt bis zu einer Nabe 523 des Lamellenträgers ZYLBE. Diese Nabe 523 wiederum ist mit der Antriebswelle AN verbunden, erstreckt sich im Unterschied zu Fig. 9 aber nunmehr in axialer Richtung beidseits des scheibenförmigen Abschnitts des Lamellenträgers ZYLBE, also ausgehend von dem mittigen scheibenförmigen Abschnitts des Lamellenträgers ZYLBE zum einen räumlich gesehen unterhalb des Lamellenpaketes 200 der Kupplung B axial in Richtung des ersten Planetenradsatzes RS1, zum anderen räumlich gesehen unterhalb des Lamellenpaketes 500 der Kupplung E axial in Richtung des zweiten Planetenradsatzes RS2.

Eine Servoeinrichtung 210 der Kupplung B ist axial auf der dem ersten Planetenradsatz RS1 zugewandten Seite des scheibenförmigen Abschnitts des Lamellenträgers ZYLBE angeordnet. Dabei ist diese Servoeinrichtung 210 räumlich gesehen oberhalb des dem ersten Planetenradsatz RS1 zugewandten Nabenabschnitts der Nabe 523 des Lamellenträgers ZYLBE angeordnet, zumindest überwiegend innerhalb des Kupplungsraumes, der durch das Lamellenpaket 200 der Kupplung B und den scheibenförmigen Abschnitt des Lamellenträgers ZYLBE gebildet wird. Dabei grenzt die Servoeinrichtung 210 unmittelbar an diesen scheibenförmigen Abschnitt und auch an den zylindrischen Abschnitt des Lamellenträgers ZYLBE mit dem Lamellenmitnahmeprofil für die Innenlamellen des Lamellenpaketes 200 an. Zur Betätigung des Lamellenpaketes 200 der Kupplung B axial in Richtung des zweiten Planetenradsatzes RS2 weist die Servoeinrichtung 210 vorzugsweise mindestens drei Betätigungsfinger 216 auf, welche den zylindrischen Abschnitt des Lamellenträgers ZYLBE mit dem Lamellenmitnahmeprofil für die Innenlamellen des Lamellenpaketes 200 in radialer und axialer Richtung umgreifen und auf die Stirnfläche des Lamellenpaketes 200 wirken, die dem ersten Planetenradsatz RS1 zugewandt ist.

Eine Servoeinrichtung 510 der Kupplung E ist axial auf der dem zweiten Planetenradsatz RS2 zugewandten Seite des scheibenförmigen Abschnitts des Lamellenträgers ZYLBE angeordnet. Dabei ist diese Servoeinrichtung 510 räumlich gesehen oberhalb des dem zweiten Planetenradsatz RS2 zugewandten Nabenabschnitts der Nabe 523 des Lamellenträgers ZYLBE angeordnet, zumindest überwiegend innerhalb des Kupplungsraumes, der durch das Lamellenpaket 500 der Kupplung E und den scheibenförmigen Abschnitt des Lamellenträgers ZYLBE gebildet wird. Dabei grenzt die Servoeinrichtung 510 unmittelbar an diesen scheibenförmigen Abschnitt und auch an den zylindrischen Abschnitt des Lamellenträgers ZYLBE mit dem Lamellenmitnahmeprofil für die Innenlamellen des Lamellenpaketes 500 an. Zur Betätigung des Lamellenpaketes 500 der Kupplung E axial in Richtung des ersten Planetenradsatzes RS1 weist die Servoeinrichtung 510 vorzugsweise mindestens drei Betätigungsfinger 516 auf, welche den zylindrischen Abschnitt des Lamellenträgers ZYLBE mit dem Lamellenmitnahmeprofil für die Innenlamellen des Lamellenpaketes 500 in radialer und axialer Richtung umgreifen und auf die Stirnfläche des Lamellenpaketes 500 wirken, die dem zweiten Planetenradsatz RS2 zugewandt ist.

In einer anderen Ausgestaltung kann anstelle der Betätigungsfinger 216 und/oder 516 der Servoeinrichtung 210 bzw. 510 auch ein ringförmiger Andruckteller vorgesehen sein.

Die Ausbildung des Ausgangselementes 230 der Kupplung B und des Ausgangselementes 530 der Kupplung E jeweils als Außenlamellenträger zur Aufnahme des - vorzugsweise als Belaglamellen ausgeführten - Außenlamellen des jeweiligen Lamellenpaketes 200 bzw. 500, wie auch die Ausbildung und Anordnung der übrigen Bauelemente der in Fig. 11 dargestellten beispielhaften neunten erfindungsgemäßen Bauteilanordnung wurde aus Fig. 9 übernommen.

Wie bereits erwähnt, sind einige Bauteilausgestaltungen aller neun erfindungsgemäßen Bauteilanordnungen als beispielhaft anzusehen. Zur Einsparung von axialer Baulänge des Automatgetriebes beispielsweise wird der Fachmann bedarfsweise den in den Figuren 3 bis 11 dargestellten Stirntrieb auch durch einen Kettentrieb ersetzen. Je nach Einbausituation und Antriebsstrang-Konfiguration wird der Fachmann bei allen vorgeschlagenen neun erfindungsgemäßen Bauteilanordnungen wahlweise mit einer zur Antriebswelle achsparallelen Abtriebswelle oder mit einem nicht rechtwinkligen Stirntrieb (Beveloid-Stirntrieb) oder einem (rechtwinkligen oder nicht rechtwinkligen) Kegeltrieb kombinieren. Aufgrund der das gesamte Getriebe in axialer Richtung durchdringenden Antriebswelle wird der Fachmann die vorgeschlagenen neun erfindungsgemäßen Bauteilanordnungen auch ohne besonderen Aufwand für eine Anwendung mit koaxial zueinander verlaufenden Antriebs- und Abtriebswelle umgestalten.

Die in Fig. 3 bis Fig. 11 dargestellten neun schematischen Bauteilanordnungen gehen generell von Lamellenbremsen als konstruktive Lösung für die als Bremse auszuführenden Schaltelemente aus. Prinzipiell sind einzelne oder auch alle Lamellenbremsen konstruktiv durch Bandbremsen ersetzbar. Im nicht geschalteten Zustand sind Bandbremsen hinsichtlich Schleppmomentverlust bekanntlich günstiger als Lamellenbremsen. Für alle gezeigten Bauteilanordnungen bietet es sich an, die im zweiten bis sechsten Vorwärtsgang nicht geschaltete Bremse D und/oder die im fünften und sechsten Vorwärtsgang sowie im Rückwärtsgang nicht geschaltete Bremse A als Bandbremse auszuführen. Ebenso können die einzelnen Bremsen bei Bedarf auch durch jeweils einen zusätzlichen Freilauf, der kinematisch zwischen dem Eingangselement der jeweiligen Bremse und dem Getriebegehäuse angeordnet ist und dieses Eingangselement in einer Drehrichtung am Getriebegehäuses festsetzt, unterstützt werden.

### Bezugszeichen

- A: erstes Schaltelement, Bremse
- B: zweites Schaltelement, Kupplung
- C: drittes Schaltelement, Bremse
- D: viertes Schaltelement, Bremse
- E: fünftes Schaltelement, Kupplung
- ZYLBE: Lamellenträger des zweiten und fünften Schaltelementes

- AN: Antriebswelle
- AB: Abtriebswelle

- GG: Getriebegehäuse
- GD: Gehäusedeckel
- GW: Gehäusewand
- GN: getriebegehäusefeste Nabe
- GZ: Gehäusezwischenwand

- NAN: Antriebsdrehzahlsensor
- NANGR: Geberrad

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenrad des ersten Planetenradsatzes
- SOW1: Sonnenwelle des ersten Planetenradsatzes
- STB11: erstes Stegblech des ersten Planetenradsatzes
- STB12: zweites Stegblech des ersten Planetenradsatzes
- RS2: zweiter Planetenradsatz
- HO2: Hohlrad des zweiten Planetenradsatzes
- SO2: Sonnenrad des zweiten Planetenradsatzes
- ST2: Steg des zweiten Planetenradsatzes
- PL2: Planetenrad des zweiten Planetenradsatzes

- RS3: dritter Planetenradsatz
- HO3: Hohlrad des dritten Planetenradsatzes
- SO3: Sonnenrad des dritten Planetenradsatzes
- ST3: Steg des dritten Planetenradsatzes
- PL3: Planetenrad des dritten Planetenradsatzes
- SOW3: Sonnenwelle des dritten Planetenradsatzes
- STB3: Stegblech des dritten Planetenradsatzes
- STW3: Stegwelle des dritten Planetenradsatzes

- ZYLRS12: Zylinder, Verbindung zwischen dem Steg des ersten Planetenradsatzes und dem Hohlrad des zweiten Planetenradsatzes
- ZYLRS13: Zylinder, Verbindung zwischen dem Hohlrad des ersten Planetenradsatzes und dem Steg des dritten Planetenradsatzes

- STST: Stirnradstufe, Stirntrieb
- STR1: erstes Stirnrad der Stirnradstufe
- STN1: Nabe des ersten Stirnrades der Stirnradstufe

- 100: Lamellen des ersten Schaltelementes
- 110: Servoeinrichtung des ersten Schaltelementes
- 120: Eingangselement des ersten Schaltelementes

- 200: Lamellen des zweiten Schaltelementes
- 210: Servoeinrichtung des zweiten Schaltelementes
- 211: Druckraum der Servoeinrichtung des zweiten Schaltelementes
- 212: Druckausgleichsraum der Servoeinrichtung des zweiten Schaltelementes
- 213: Rückstellelement der Servoeinrichtung des zweiten Schaltelementes
- 214: Kolben der Servoeinrichtung des zweiten Schaltelementes
- 215: Stauscheibe der Servoeinrichtung des zweiten Schaltelementes
- 216: Andruckteller der Servoeinrichtung des zweiten Schaltelementes
- 218: Druckmittelzuführung zum Druckraum des zweiten Schaltelementes
- 219: Schmiermittelzuführung zum Druckausgleichsraum des zweiten Schaltelementes
- 220: Eingangselement des zweiten Schaltelementes
- 221: zylindrischer Abschnitt des Eingangselementes des zweiten Schaltelementes elementes
- 222: scheibenförmiger Abschnitt des Eingangselementes des zweiten Schaltelementes
- 223: Nabe des Eingangselementes des zweiten Schalt-
- 230: Ausgangselement des zweiten Schaltelementes

- 300: Lamellen des dritten Schaltelementes
- 310: Servoeinrichtung des dritten Schaltelementes
- 320: Eingangselement des dritten Schaltelementes

- 400: Lamellen des vierten Schaltelementes
- 410: Servoeinrichtung des vierten Schaltelementes
- 420: Eingangselement des vierten Schaltelementes

- 500: Lamellen des fünften Schaltelementes
- 510: Servoeinrichtung des fünften Schaltelementes
- 511: Druckraum des fünften Schaltelementes
- 512: Druckausgleichsraum des fünften Schaltelementes
- 513: Rückstellelement der Servoeinrichtung des fünften Schaltelementes
- 514: Kolben der Servoeinrichtung des fünften Schaltelementes
- 515: zylinderförmige Stützscheibe der Servoeinrichtung des fünften Schaltelementes
- 516: Betätigungsfinger der Servoeinrichtung des fünften Schaltelementes
- 518: Druckmittelzuführung zum Druckraum des fünften Schaltelementes
- 519: Schmiermittelzuführung zum Druckausgleichsraum des fünften Schaltelementes
- 520: Eingangselement des fünften Schaltelementes
- 521: zylindrischer Abschnitt des Eingangselementes des fünften Schaltelementes
- 522: scheibenförmiger Abschnitt des Eingangselementes des fünften Schaltelementes
- 523: Nabe des Eingangselementes des fünften Schaltelementes
- 530: Ausgangselement des fünften Schaltelementes

## Patentansprüche

1. Mehrstufen-Automatgetriebe, mit einer Antriebswelle (AN), einer Abtriebswelle (AB), mindestens drei Einzel-Planetenradsätzen (RS1, RS2, RS3), sowie mindestens fünf Schaltelementen (A bis E), wobei
- die drei Planetenradsätze (RS1, RS2, RS3) koaxial zueinander angeordnet sind,
- der zweite und dritte Planetenradsatz (RS2, RS3) axial nebeneinander angeordnet sind,
- ein Sonnenrad (SO3) des dritten Planetenradsatzes (RS3) über das erste Schaltelement (A) an einem Getriebegehäuse (GG) des Mehrstufen-Automatgetriebes festsetzbar ist,
- die Antriebswelle (AN) mit einem Sonnenrad (SO2) des zweiten Planetenradsatzes (RS2) verbunden ist,
- die Antriebswelle (AN) über das zweite Schaltelement (B) mit einem Sonnenrad (SO1) des ersten Planetenradsatzes (RS1) und/oder über das fünfte Schaltelement (E) mit einem Steg (ST1) des ersten Planetenradsatzes (RS1) verbindbar ist,
- alternativ das Sonnenrad (SO1) des ersten Planetenradsatzes (RS1) über das dritte Schaltelement (C) und/oder der Steg (ST1) des ersten Planetenradsatzes (RS1) über das vierte Schaltelement (D) an dem Getriebegehäuse (GG) festsetzbar ist,
und wobei
- entweder die Abtriebswelle (AB) und ein Hohlrad (HO1) des ersten Planetenradsatzes (RS1) und ein Steg (ST3) des dritten Planetenradsatzes (RS3) miteinander verbunden sind und ein Steg (ST2) des zweiten Planetenradsatzes (RS2) mit einem Hohlrad (H03) des dritten Planetenradsatzes (RS3) verbunden ist und der Steg (ST1) des ersten Planetenradsatzes (RS1) mit einem Hohlrad (HO2) des zweiten Planetenradsatzes (RS2) verbunden ist,
- oder die Abtriebswelle (AB) und das Hohlrad (HO1) des ersten Planetenradsatzes (RS1) und der Steg (ST2) des zweiten Planetenradsatzes (RS2) miteinander verbunden sind und der Steg (ST3) des dritten Planetenradsatzes (RS3) mit dem Hohlrad (HO2) des zweiten Planetenradsatzes (RS2) verbunden ist und der Steg (ST1) des ersten Planetenradsatzes (RS1) mit dem Hohlrad (HO3) des dritten Planetenradsatzes (RS3) verbunden ist,
- der zweite Planetenradsatz (RS2) in axialer Richtung nur von einer Welle zentriert vollständig durchgriffen wird und
- das erste Schaltelelment (A) als Lamellenbremse ausgebildet ist,
**dadurch gekennzeichnet,**
- **dass** das zweite und fünfte Schaltelement (B, E), räumlich gesehen, axial zwischen dem ersten und zweiten Planetenradsataz (RS1, RS2) angeordnet sind und
- **dass** das vierte Schaltelement (D), räumlich gesehen, in einem Bereich radial oberhalb der Planetenradsätze (RS1, RS2, RS3) angeordnet ist.

2. Mehrstufen-Automatgetriebe nach Anspruch 1, **dadurch gekennzeichnet, dass** der erste Planetenradsatz (RS1) in axialer Richtung nur von einer Welle zentrisch vollständig durchgriffen wird.

3. Mehrstufen-Automatgetriebe nach Anspruch 2, **dadurch gekennzeichnet, dass** die den ersten bzw. den zweiten Planetenradsatz (RS1, RS2) in axialer Richtung durchgreifende Welle die Antriebswelle (AN) des Automatgetriebes ist.

4. Mehrstufen-Automatgetriebe nach Anspruch 1, 2 oder 3 , **dadurch gekennzeichnet, dass** ein Lamellenpaket (500) des fünften Schaltelementes (E) auf einem größeren Durchmesser angeordnet ist als ein Lamellenpaket (200) des zweiten Schaltelementes (B).

5. Mehrstufen-Automatgetriebe nach einem der Ansprüche 1 bis 4, **dadurch gekennzeichnet, dass** das zweite und fünfte Schaltelement (B, E) als eine Baugruppe zusammengefaßt sind, mit
- den Lamellenpaketen (200, 500) des zweiten und fünften Schaltelementes (B, E),
- je einer Servoeinrichtung (210, 510) des zweiten und fünften Schaltelementes (B, E) zur Betätigung der jeweiligen Lamellenpakete (200, 500) des zweiten bzw. fünften Schaltelementes (B, E) sowie
- einem für das zweite und fünfte Schaltelement (B, E) gemeinsamen Lamellenträger (ZYLBE) zur Aufnahme der Außen- oder Belaglamellen der Lamellenpakete (200, 500) des zweiten und fünften Schaltelementes (B, E).

6. Mehrstufen-Automatgetriebe nach einem der Ansprüche 1 bis 5, **dadurch gekennzeichnet, dass** das Verbindungselement zwischen dem Steg (ST1) des ersten Planetenradsatzes (RS1) und dem Hohlrad (HO2) des zweiten Planetenradsatzes (RS2) zugleich einen Außenlamellenträger des fünften Schaltelementes (E) bildet.

7. Mehrstufen-Automatgetriebe nach Anspruch 6, **dadurch gekennzeichnet, dass** der für das zweite und fünfte Schaltelement (B, E) gemeinsame Lamellenträger (ZYLBE) einen Kupplungsraum bildet, innerhalb dessen das Lamellenpaket (200) des zweiten Schaltelementes (B) und die Servoeinrichtung (210) des zweiten Schaltelementes (B) angeordnet sind.

8. Mehrstufen-Automatgetriebe nach einem der Ansprüche 1 bis 7, **dadurch gekennzeichnet, dass** die Servoeinrichtung (510) des fünften Schaltelementes (E) und/oder die Servoeinrichtung (210) des zweiten Schaltelementes (B) das ihr zugeordnete Lamellenpaket (500, 200) beim Schließen des fünften bzw. zweiten Schaltelementes (E, B) axial in Richtung des ersten Planetenradsatzes (RS1) betätigt.

9. Mehrstufen-Automatgetriebe nach Anspruch 8, **dadurch gekennzeichnet, dass** die Servoeinrichtung (510) des fünften Schaltelementes (E) und/oder die Servoeinrichtung (210) des zweiten Schaltelementes (B) räumlich gesehen axial zwischen dem ihr zugeordneten Lamellenpaket (500, 200) und dem zweiten Planetenradsatz (RS2) angeordnet ist.

10. Mehrstufen-Automatgetriebe nach einem der Ansprüche 1 bis 7, **dadurch gekennzeichnet, dass** die Servoeinrichtung (510) des fünften Schaltelementes (E) und/oder die Servoeinrichtung (210) des zweiten Schaltelementes (B) das ihr zugeordnete Lamellenpaket (500, 200) beim Schließen des fünften bzw. zweiten Schaltelementes (E, B) axial in Richtung des zweiten Planetenradsatzes (RS2) betätigt.

11. Mehrstufen-Automatgetriebe nach Anspruch 10, **dadurch gekennzeichnet, dass** die Servoeinrichtung (510) des fünften Schaltelementes (E) und/oder die Servoeinrichtung (210) des zweiten Schaltelementes (B) räumlich gesehen axial zwischen dem ihr zugeordneten Lamellenpaket (500, 200) und dem ersten Planetenradsatz (RS1) angeordnet ist.

12. Mehrstufen-Automatgetriebe nach einem der Ansprüche 1 bis 11, **dadurch gekennzeichnet, dass** die Servoeinrichtung (210) des zweiten Schaltelementes (B) und/oder die Servoeinrichtung (510) des fünften Schaltelementes (E) an der Welle gelagert ist, die den ersten Planetenradsatz (RS1) zentrisch durchgreift, insbesondere an der Antriebswelle (AN).

13. Mehrstufen-Automatgetriebe nach einem der Ansprüche 1 bis 11, **dadurch gekennzeichnet, dass** die Servoeinrichtung (210) des zweiten Schaltelementes (B) und/oder die Servoeinrichtung (510) des fünften Schaltelementes (E) an dem Sonnenrad (SO1) des ersten Planetenradsatzes (RS1) gelagert ist.

14. Mehrstufen-Automatgetriebe nach einem der Ansprüche 1 bis 13, **dadurch gekennzeichnet, dass** das dritte Schaltelement (D), räumlich gesehen, in axialer Richtung gesehen in einem Bereich radial oberhalb der Planetenradsätze (RS1, RS2, RS3) angeordnet sind.

15. Mehrstufen-Automatgetriebe nach Anspruch 14, **dadurch gekennzeichnet, dass** das dritte und vierte Schaltelement (C, D) axial nebeneinander angeordnet sind, wobei insbesondere Lamellenpakete (300, 400) des dritten und vierten Schaltelementes (C, D) auf einem zumindest ähnlichem Durchmesser angeordnet sind.

16. Mehrstufen-Automatgetriebe nach Anspruch 14 und 15, **dadurch gekennzeichnet, dass** das dritte und vierte Schaltelement (C, D) eine vormontierbare Baugruppe bilden, welche die Lamellenpakete (300, 400) des dritten und vierten Schaltelementes (C, D) und einen für das dritte und vierte Schaltelement (C, D) gemeinsamen Außenlamellenträger aufweist, wobei eine Servoeinrichtung (310) zur Betätigung des Lamellenpaketes (300) des dritten Schaltelementes (C) und eine Servoeinrichtung (410) zur Betätigung des Lamellenpaketes (400) des vierten Schaltelementes (D) zumindest teilweise in diesem gemeinsamen Außenlamellenträger integriert sind.

17. Mehrstufen-Automatgetriebe nach einem der Ansprüche 1 bis 13, **dadurch gekennzeichnet, dass** das dritte Schaltelement (C) räumlich gesehen axial neben dem ersten Planetenradsatz (RS1) an dessen dem zweiten Planetenradsatz (RS2) abgewandten Seite angeordnet ist.

18. Mehrstufen-Automatgetriebe nach einem der Ansprüche 1 bis 17, **dadurch gekennzeichnet, dass** das erste Schaltelement (A) räumlich gesehen auf der dem zweiten Planetenradsatz (RS2) abgewandten Seite des dritten Planetenradsatzes (RS3) angeordnet ist.

19. Mehrstufen-Automatgetriebe nach Anspruch 18, **dadurch gekennzeichnet, dass** das erste Schaltelement (A) axial an den dritten Planetenradsatz (RS3) angrenzt.

20. Mehrstufen-Automatgetriebe nach einem der Ansprüche 1 bis 19, **dadurch gekennzeichnet, dass** das erste Schaltelement (A) an eine Außenwand des Getriebegehäuses (GG) oder an einen Getriebegehäusedeckel, der mit dem Getriebegehäuse (GG) verdrehfest verbunden ist und eine Außenwand des Automatgetriebes bildet, angrenzt.

21. Mehrstufen-Automatgetriebe nach einem der Ansprüche 1 bis 17, **dadurch gekennzeichnet, dass** das erste Schaltelement (A) in axialer Richtung gesehen in einem Bereich radial oberhalb der Planetenradsätze (RS1, RS2, RS3) angeordnet ist, insbesondere in einem Bereich in axialer Richtung gesehen radial über dem dritten Planetenradsatz (RS3).

22. Mehrstufen-Automatgetriebe nach Anspruch 21, **dadurch gekennzeichnet, dass** das erste und vierte Schaltelement (A, D) axial nebeneinander angeordnet sind, wobei insbesondere Lamellenpakete (100, 400) des ersten und vierten Schaltelementes (A, D) auf einem zumindest ähnlichem Durchmesser angeordnet sind.

23. Mehrstufen-Automatgetriebe nach Anspruch 21 oder 22, **dadurch gekennzeichnet, dass** das erste und vierte Schaltelement (A, D) eine vormontierbare Baugruppe bilden, welche die Lamellenpakete (100, 400) des ersten und vierten Schaltelementes (A, D) und einen für das erste und vierte Schaltelement (A, D) gemeinsamen Außenlamellenträger aufweist, wobei eine Servoeinrichtung (110) zur Betätigung des Lamellenpaketes (100) des ersten Schaltelementes (A) und eine Servoeinrichtung (410) zur Betätigung des Lamellenpaketes (400) des vierten Schaltelementes (D) zumindest teilweise in diesem gemeinsamen Außenlamellenträger integriert sind.

24. Mehrstufen-Automatgetriebe nach einem der Ansprüche 1 bis 23, **dadurch gekennzeichnet, dass** Antriebswelle (AN) und Abtriebswelle (AB) nicht koaxial zueinander verlaufen, insbesondere daß Antriebswelle (AN) und Abtriebswelle (AB) achsparallel oder winklig zueinander verlaufen.

25. Mehrstufen-Automatgetriebe nach einem der Ansprüche 1 bis 24, **dadurch gekennzeichnet, dass** eine Stirnradstufe (STST) oder ein Kettentrieb vorgesehen ist, über den das Hohlrad (HO1) des ersten Planetenradsatzes (RS1) und der mit diesem Hohlrad (HO1) verbundene Steg (ST3, ST2) des dritten oder zweiten Planetenradsatzes (RS3, RS2) mit der Abtriebswelle (AB) wirkverbunden ist, wobei ein erstes Stirnrad (STR1) der Stirnradstufe (STST) bzw. ein erstes Kettenrad des Kettentriebs axial zwischen dem dritten Planetenradsatz (RS3) und dem ersten Schaltelement (A) angeordnet ist.

26. Mehrstufen-Automatgetriebe nach einem der Ansprüche 1 bis 24, **dadurch gekennzeichnet, dass** eine Stirnradstufe (STST) oder ein Kettentrieb vorgesehen ist, über den das Hohlrad (HO1) des ersten Planetenradsatzes (RS1) und der mit diesem Hohlrad (HO1) verbundene Steg (ST3, ST2) des dritten oder zweiten Planetenradsatzes (RS3, RS2) mit der Abtriebswelle (AB) wirkverbunden ist, wobei ein erstes Stirnrad (STR1) der Stirnradstufe (STST) bzw. ein erstes Kettenrad des Kettentriebs an eine Außenwand des Getriebegehäuses (GG) oder einen getriebegehäusefesten Gehäusedeckel angrenzt.

27. Mehrstufen-Automatgetriebe nach Anspruch 26, **dadurch gekennzeichnet, dass** das erste Schaltelement (A) räumlich gesehen zwischen dem dritten Planetenradsatz (RS3) und dem ersten Stirnrad (STR1) der Stirnradstufe (STST) bzw. zwischen dem dritten Planetenradsatz (RS3) und dem ersten Kettenrad des Kettentriebs angeordnet ist.

28. Mehrstufen-Automatgetriebe nach Anspruch 26, **dadurch gekennzeichnet, dass** das erste Schaltelement (A) räumlich gesehen innerhalb eines Zylinderraumes angeordnet ist, der durch das erste Kettenrad des Kettentriebs gebildet wird, wobei das erste Schaltelement (A) axial an den dritten Planetenradsatz (RS3) angrenzt.

29. Mehrstufen-Automatgetriebe nach einem der Ansprüche 1 bis 23, **dadurch gekennzeichnet, dass** Antriebswelle (AN) und Abtriebswelle (AB) koaxial zueinander verlaufen.

30. Mehrstufen-Automatgetriebe nach Anspruch 29, **dadurch gekennzeichnet, dass** die mit dem Hohlrad (HO1) des ersten Planetenradsatzes (RS1) wirkverbundene Abtriebswelle (AB) den dritten Planetenradsatz (RS3) in axialer Richtung zentrisch durchgreift.

31. Mehrstufen-Automatgetriebe nach Anspruch 29 oder 30, **dadurch gekennzeichnet, dass** die mit dem Hohlrad (HO1) des ersten Planetenradsatzes (RS1) wirkverbundene Abtriebswelle (AB) einen Kupplungsraum des ersten Schaltelementes (A), der insbesondere durch einen Lamellenträger und/oder die Servoeinrichtung (110) des ersten Schaltelementes (A) gebildet wird, in axialer Richtung zentrisch durchgreift.

32. Mehrstufen-Automatgetriebe nach einem der Ansprüche 1 bis 31, **dadurch gekennzeichnet, dass** durch selektives Schließen der Schaltelemente (A bis E) mindestens sechs Vorwärtsgänge derart schaltbar sind, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird, wobei in dem ersten Vorwärtsgang das erste und vierte Schaltelement (A, D), in dem zweiten Vorwärtsgang das erste und dritte Schaltelement (A, C), in dem dritten Vorwärtsgang das erste und zweite Schaltelement (A, B), in dem vierten Vorwärtsgang das erste und fünfte Schaltelement (A, E), in dem fünften Vorwärtsgang das zweite und fünfte Schaltelement (B, E), in dem sechsten Vorwärtsgang das dritte und fünfte Schaltelement (C, E), und in einem Rückwärtsgang das zweite und vierte Schaltelement (B, D) geschlossen sind.

## Claims

1. The invention relates to a multistep automatic transmission with a drive shaft (AN), an output shaft (AB), at least three separate planetary gearsets (RS1, RS2, RS3), and at least five shifting components (A-E), with
- the three planetary gearsets (RS1, RS2, RS3) being arranged coaxially in relation to each other;
- the second and third planetary gearsets (RS2, RS3) being arranged axially next to each other;
- a sun gear (S03) of the third planetary gearset (RS3) being lockable to a transmission housing (GG) of the multistep automatic transmission via the first shifting component (A);
- the drive shaft (AN) being connected to a sun gear (SO2) of the second planetary gearset (RS2);
- the drive shaft (AN) being connectable via the second shifting component (B) to a sun gear (SO1) of the first planetary gearset (RS1) and/or via the fifth shifting component (E) to a spider (ST1) of the first planetary gearset (RS1);
- alternatively, the sun gear (SO1) of the first planetary gearset (RS1) being lockable to the transmission housing (GG) via the third shifting component (C) and/or the spider (ST1) of the first planetary gearset (RS1) being lockable to the transmission housing (GG) via the fourth shifting component (D);
and with
- either the output shaft (AB) and a ring gear (HO1) of the first planetary gearset (RS1) and a spider (ST3) of the third planetary gearset (RS3) being connected to each other, and a spider (ST2) of the second planetary gearset (RS2) being connected to a ring gear (HO3) of the third planetary gearset (RS3), and the spider (ST1) of the first planetary gearset (RS1) being connected to a ring gear (HO2) of the second planetary gearset (RS2),
- or the output shaft (AB) and the ring gear (HO1) of the first planetary gearset (RS1) and the spider (ST2) of the second planetary gearset (RS2) being connected to each other, and the spider (ST3) of the third planetary gearset (RS3) being connected to the ring gear (HO2) of the second planetary gearset (RS2), and the spider (ST1) of the first planetary gearset (RS1) being connected to the ring gear (HO3) of the third planetary gearset (RS3);
- the second planetary gearset (RS2) being centrally fully penetrated in axial direction by a shaft, and
- the first shifting component (A) being a multidisk brake,
**characterized**
- **in that** the second and fifth shifting components (B, E) are arranged axially between the first and second planetary gear sets (RS2, RS2) and
- **in that** the fourth shifting component (D) is arranged in an area radially above the planetary gearsets (RS1, RS2, RS3).

2. A multistep automatic transmission according to claim 1, **characterized in that** the first planetary gearset (RS1) is centrally fully penetrated in axial direction by a shaft.

3. A multistep automatic transmission according to claim 2, **characterized in that** the shaft penetrating through the first or second planetary gearset (RS1, RS2) in axial direction is the drive shaft (AN) of the automatic transmission.

4. A multistep automatic transmission according to claim 1, 2 or 3, **characterized in that** a disk pack (500) of the fifth shifting component (E) is arranged on a larger diameter than a disk pack (200) of the second shifting component (B).

5. A multistep automatic transmission according to one of the claims 1 through 4, **characterized in that** the second and fifth shifting components (B, E) are combined in an assembly with
- the disk packs (200, 500) of the second and fifth shifting components (B, E);
- one servo unit (210, 510) each of the second and fifth shifting components (B, E) for actuation of the respective disk pack (200, 500) of the second or fifth shifting component (B, E); and
- a common disk carrier (ZYLBE) for the second and fifth shifting components (B, E) for receiving the outer or lined disks of the disk packs (200, 500) of the second and fifth shifting components (B, E).

6. A multistep automatic transmission according to one of the claims 1 through 5, **characterized in that** the connecting element between the spider (ST1) of the first planetary gearset (RS1) and the ring gear (HO2) of the second planetary gearset (RS2) also constitutes an outer disk carrier of the fifth shifting component (E).

7. A multistep automatic transmission according to claim 6, **characterized in that** the disk carrier (ZYLBE) shared by the second and fifth shifting components (B, E) forms a clutch space within which the disk pack (200) and the servo unit (210) of the second shifting component (B) are arranged.

8. A multistep automatic transmission according to one of the claims 1 through 7, **characterized in that** the servo unit (510) of the fifth shifting component (E) and/or the servo unit (210) of the second shifting component (B) actuate/s the respective disk pack (500, 200) axially towards the first planetary gearset (RS1) when the fifth or second shifting component (E, B) closes.

9. A multistep automatic transmission according to claim 8, **characterized in that** the servo unit (510) of the fifth shifting component (E) and/or the servo unit (210) of the second shifting component are/is arranged axially between the respective disk pack (500, 200) and the second planetary gearset (RS2).

10. A multistep automatic transmission according to one of the claims 1 through 7, **characterized in that** the servo unit (510) of the fifth shifting component (E) and/or the servo unit (210) of the second shifting component (B) actuate/s the respective disk pack (500, 200) axially towards the second planetary gearset (RS2) when the fifth or second shifting element (E, B) closes.

11. A multistep automatic transmission according to claim 10, **characterized in that** the servo unit (510) of the fifth shifting component (E) and/or the servo unit (210) of the second shifting component (B) are/is arranged axially between the respective disk pack (500, 200) and the first planetary gearset (RS2).

12. A multistep automatic transmission according to one of the claims 1 through 11, **characterized in that** the servo unit (210) of the second shifting component (B) and/or the servo unit (510) of the fifth shifting component (E) are/is supported on the shaft which centrally penetrates through the first planetary gearset (RS1), in particular on the drive shaft (AN).

13. A multistep automatic transmission according to one of the claims 1 through 11, **characterized in that** the servo unit (210) of the second shifting component (B) and/or the servo unit (510) of the fifth shifting component (E) are/is supported on the sun gear (SO1) of the first planetary gearset (RS1).

14. A multistep automatic transmission according to one of the claims 1 through 13, **characterized in that** the third shifting component (D), seen in axial direction, is arranged in an area radially above the planetary gearsets (RS1, RS2, RS3).

15. A multistep automatic transmission according to claim 14, **characterized in that** the third and fourth shifting components (C, D) are arranged axially next to each other, with the disk packs (300, 400) of the third and fourth shifting components (C, D) being arranged on a diameter of at least similar dimension.

16. A multistep automatic transmission according to the claims 14 and 15, **characterized in that** the third and fourth shifting components (C, D) constitute a preassembled system which contains the disk packs (300, 400) of the third and fourth shifting components (C, D) and an outer disk carrier shared by the third and fourth shifting components (C, D), with a servo unit (310) for actuation of the disk pack (300) of the third shifting component (C) and a servo unit (410) for actuation of the disk pack (400) of the fourth shifting component (D) being at least partially integrated into this shared outer disk carrier.

17. A multistep automatic transmission according to one of the claims 1 through 13, **characterized in that** the third shifting component (C) is arranged axially next to the first planetary gearset (RS1) on the side of it which does not face the second planetary gearset (RS2).

18. A multistep automatic transmission according to one of the claims 1 through 17, **characterized in that** the first shifting component (A) is arranged on the side of the third planetary gearset (RS3) which does not face the second planetary gearset (RS2).

19. A multistep automatic transmission according to claim 18, **characterized in that** the first shifting component (A) is arranged axially adjacent to the third planetary gearset (RS3).

20. A multistep automatic transmission according to one of the claims 1 through 19, **characterized in that** the first shifting component (A) is arranged adjacent to an outer wall of the transmission housing (GG) or to a transmission housing cover which is nonrotationally connected to the transmission housing (GG) and constitutes an outer wall of the automatic transmission.

21. A multistep automatic transmission according to one of the claims 1 through 17, **characterized in that** the first shifting component (A), viewed in axial direction, is arranged in an area radially above the planetary gearsets (RS1, RS2, RS3), in particular in an area radially above the third planetary gearset (RS3), viewed in axial direction.

22. A multistep automatic transmission according to claim 21, **characterized in that** the first and fourth shifting components (A, D) are arranged axially next to each other, with the disk packs (100, 400) of the first and fourth shifting components (A, D) being arranged on a diameter of at least similar dimension.

23. A multistep automatic transmission according to claim 21 or 22, **characterized in that** the first and fourth shifting components (A, D) constitute a preassembled system which contains the disk packs (100, 400) of the first and fourth shifting components (A, D) and an outer disk carrier shared by the first and fourth shifting components (A, D), with a servo unit (110) for actuation of the disk pack (100) of the first shifting component (A) and a servo unit (410) for actuation of the disk pack (400) of the fourth shifting component (D) being at least partially integrated into this shared outer disk carrier.

24. A multistep automatic transmission according to one of the claims 1 through 23, **characterized in that** the drive shaft (AN) and the output shaft (AB) are not arranged coaxially in relation to each other; in particular that the drive shaft (AN) and the output shaft (AB) are arranged in an axis-parallel manner or at angles to each other.

25. A multistep automatic transmission according to one of the claims 1 through 24, **characterized in that** a spur gear stage (STST) or a chain drive is provided, through which the ring gear (HO1) of the first planetary gearset (RS1) and the ring-gear (HO1)-linked spider (ST3, ST2) of the third or second planetary gearset (RS3, RS2) are actively linked to the output shaft (AB), with a first spur gear (STR1) of the spur gear stage (STST) or a first sprocket wheel of the chain drive being arranged axially between the third planetary gearset (RS3) and the first shifting component (A).

26. A multistep automatic transmission according to one of the claims 1 through 24, **characterized in that** a spur gear stage (STST) or a chain drive is provided, through which the ring gear (HO1) of the first planetary gearset (RS1) and the ring-gear (HO1)-linked spider (ST3, ST2) of the third or second planetary gearset (RS3, RS2) are actively linked to the output shaft (AB), with a first spur gear (STR1) of the spur gear stage (STST) or a first sprocket wheel of the chain drive being arranged adjacent to an outer wall of the transmission housing (GG) or to a housing cover fixed to the transmission housing.

27. A multistep automatic transmission according to one of the claims 1 through 23, **characterized in that** the drive shaft (AN) and the output shaft (AB) are arranged coaxially in relation to each other.

28. A multistep automatic transmission according to claim 26, **characterized in that** the first shifting component (A) is arranged within a cylinder space formed by the first chain wheel of the chain drive, with the first shifting component (A) being arranged axially adjacent to the third planetary gearset (RS3).

29. A multistep automatic transmission according to one of the claims 1 through 23, **characterized in that** drive shaft (AN) and the output shaft (AB) are arranged coaxially in relation to each other.

30. A multistep automatic transmission according to claim 29, **characterized in that** the output shaft (AB), which is actively connected to the ring gear (HO1) of the first planetary gearset (RS1), centrally extends through the third planetary gearset (RS3) in axial direction.

31. A multistep automatic transmission according to claim 29 or 30, **characterized in that** the output shaft (AB), which is actively linked to the ring gear (HO1) of the first planetary gearset (RS1), in axial direction centrally extends through a clutch space of the first shifting component (A), with this clutch space being formed in particular by a disk carrier and/or the servo unit (110) of the first shifting component (A).

32. A multistep automatic transmission according to one of the claims 1 through 31, **characterized in that** through selective locking of the shifting components (A-E) at least six forward gears are selectable in such a way that for shifts to the next higher or next lower gear in each case only one of the shifting components being activated is unlocked and another shifting component is locked, with the first and fourth shifting components (A, D) being locked in the first forward gear, the first and third shifting components (A, C) in the second forward gear, the first and second shifting components (A, B) in the third forward gear, the first and fifth shifting components (A, E) in the fourth forward gear, the second and fifth shifting components (B, E) in the fifth forward gear, the third and fifth shifting components (C, E) in the sixth forward gear, and the second and fourth shifting components (B, D) in a reverse gear.

## Revendications

1. Transmission automatique à plusieurs étages dotée d'un arbre d'entrée (AN), d'un arbre de sortie (AB), d'au moins trois trains épicycloïdaux individuels (RS1, RS2, RS3) ainsi que d'au moins cinq éléments de commande (A à E), sachant que
- les trois trains épicycloïdaux (RS1, RS2, RS3) sont disposés coaxialement entre eux,
- le deuxième et le troisième train épicycloïdal (RS2, RS3) sont juxtaposés axialement,
- un planétaire (SO3) du troisième train épicycloïdal (RS3) peut être fixé - à l'aide du premier élément de commande (A) - à un carter de boîte (GG) de la transmission automatique à plusieurs étages,
- l'arbre d'entrée (AN) est lié à un planétaire (SO2) du deuxième train épicycloïdal (RS2),
- l'arbre d'entrée (AN) peut être lié - à l'aide du deuxième élément de commande (B) - à un planétaire (SO1) du premier train épicycloïdal (RS1) et/ou à l'aide du cinquième élément de commande (E) à une nervure (ST1) du premier train épicycloïdal (RS1),
- alternativement, le planétaire (SO1) du premier train épicycloïdal (RS1) peut être lié - à l'aide du troisième élément de commande (C) - et/ou la nervure (ST1) du premier train épicycloïdal (RS1) - à l'aide du quatrième élément de commande (D) - au carter de boîte (GG),
et sachant que
- ou l'arbre de sortie (AB) et une couronne (HO1) du premier train épicycloïdal (RS1) et une nervure (ST3) du troisième train épicycloïdal (RS3) sont liés entre eux et une nervure (ST2) du deuxième train épicycloïdal (RS2) est lié à une couronne (HO3) du troisième train épicycloïdal (RS3) et la nervure (ST1) du premier train épicycloïdal (RS1) est liée à une couronne (H02) du deuxième train épicycloïdal (RS2),
- ou l'arbre de sortie (AB) et la couronne (HO1) du premier train épicycloïdal (RS1) et la nervure (ST2) du deuxième train épicycloïdal (RS2) sont liés entre eux et la nervure (ST3) du troisième train épicycloïdal (RS3) est liée à la couronne (H02) du deuxième train épicycloïdal (RS2) et la nervure (ST1) du premier train épicycloïdal (RS1) est liée à la couronne (H03) du troisième train épicycloïdal (RS3),
- le deuxième train épicycloïdal (RS2) est pénétré centriquement et dans le sens axial complètement par un seul arbre et
- le premier élément de commande (A) est réalisé comme frein à disques multiples,
**caractérisée en ce que**
- le premier et le cinquième élément de commande (B, E) sont disposés axialement entre le premier et le deuxième train épicycloïdal (RS1, RS2) et
- le quatrième élément de commande (D) est disposé radialement dans une zone au-dessus des trains épicycloïdaux (RS1, RS2, RS3).

2. Transmission automatique à plusieurs étages selon la revendication 1, **caractérisée en ce que** le premier train épicycloïdal (RS1) est pénétré centriquement et dans le sens axial complètement par un seul arbre.

3. Transmission automatique à plusieurs étages selon la revendication 2, **caractérisée en ce que** l'arbre pénétrant le premier ou le deuxième train épicycloïdal (RS1, RS2) dans le sens axial est l'arbre d'entrée (AN) de la transmission automatique.

4. Transmission automatique à plusieurs étages selon la revendication 1, 2 ou 3, **caractérisée en ce que** un ensemble de disques (500) du cinquième élément de commande (E) est disposé sur un diamètre plus grand que l'ensemble de disques (200) du deuxième élément de commande (B).

5. Transmission automatique à plusieurs étages selon une des revendications 1 à 4, **caractérisée en ce que** le deuxième et le cinquième élément de commande (B, E) sont groupés dans un sous-ensemble, comportant
- les ensembles de disques (200, 500) du deuxième et du cinquième élément de commande (B, E),
- un dispositif d'assistance (210, 510) du deuxième et du cinquième élément de commande (B, E) pour l'actionnement des ensembles de disques (200, 500) respectivement du deuxième et du cinquième élément de commande (B, E), ainsi que
- un plateau porte-disques (ZYLBE) commun au deuxième et au cinquième élément de commande (B, E) pour le logement des disques extérieurs et des disques garnis des ensembles de disques (200, 500) du deuxième et du cinquième élément de commande (B, E).

6. Transmission automatique à plusieurs étages selon une des revendications 1 à 5, **caractérisée en ce que** l'élément de liaison entre la nervure (ST1) du premier train épicycloïdal (RS1) et la couronne (HO2) du deuxième train épicycloïdal (RS2) forme un plateau porte-disques extérieur du cinquième élément de commande (E).

7. Transmission automatique à plusieurs étages selon la revendication 6, **caractérisée en ce que** le plateau porte-disques (ZYLBE) commun au deuxième et cinquième élément de commande (B, E) forme une chambre d'embrayage dans laquelle sont disposés l'ensemble de disques (200) du deuxième élément de commande (B) et le dispositif d'assistance (210) du deuxième élément de commande (B).

8. Transmission automatique à plusieurs étages selon une des revendications 1 à 7, **caractérisée en ce que** le dispositif d'assistance (510) du cinquième élément de commande (E) et/ou le dispositif d'assistance (210) du deuxième élément de commande (B) actionne axialement et dans le sens du premier train épicycloïdal (RS1) au moment de la fermeture du cinquième ou du deuxième élément de commande (E, B) l'ensemble de disques (500, 200) qui lui est associé.

9. Transmission automatique à plusieurs étages selon la revendication 8, **caractérisée en ce que** le dispositif d'assistance (510) du cinquième élément de commande (E) et/ou le dispositif d'assistance (210) du deuxième élément de commande (B) est disposé axialement entre l'ensemble de disques (500, 200) qui lui est associé et le deuxième train épicycloïdal (RS2).

10. Transmission automatique à plusieurs étages selon une des revendications 1 à 7, **caractérisée en ce que** le dispositif d'assistance (510) du cinquième élément de commande (E) et/ou le dispositif d'assistance (210) du deuxième élément de commande (B) actionne axialement et dans le sens du deuxième train épicycloïdal (RS2) au moment de la fermeture du cinquième ou du deuxième élément de commande (E, B) l'ensemble de disques (500, 200) qui lui est associé.

11. Transmission automatique à plusieurs étages selon la revendication 10, **caractérisée en ce que** le dispositif d'assistance (510) du cinquième élément de commande (E) et/ou le dispositif d'assistance (210) du deuxième élément de commande (B) est disposé axialement entre l'ensemble de disques (500, 200) qui lui est associé et le premier train épicycloïdal (RS2).

12. Transmission automatique à plusieurs étages selon une des revendications 1 à 11, **caractérisée en ce que** le dispositif d'assistance (210) du deuxième élément de commande (B) et/ou le dispositif d'assistance (510) du cinquième élément de commande (E) est logé sur un arbre pénétrant centriquement le premier train épicycloïdal (RS1), en particulier sur l'arbre d'entrée (AN).

13. Transmission automatique à plusieurs étages selon une des revendications 1 à 11, **caractérisée en ce que** le dispositif d'assistance (210) du deuxième élément de commande (B) et/ou le dispositif d'assistance (510) du cinquième élément de commande (E) est logé sur le planétaire (SO1) du premier train épicycloïdal (RS1).

14. Transmission automatique à plusieurs étages selon une des revendications 1 à 13, **caractérisée en ce que** le troisième élément de commande (D) est disposé dans le sens axial dans une zone radiale au-dessus des trains épicycloïdaux (RS1, RS2, RS3).

15. Transmission automatique à plusieurs étages selon la revendication 14, **caractérisée en ce que** le troisième et le quatrième élément de commande (C, D) sont juxtaposés axialement, sachant que en particulier les ensembles de disques (300, 400) du troisième et du quatrième élément de commande (C, D) sont disposés sur un diamètre au moins similaire.

16. Transmission automatique à plusieurs étages selon les revendications 14 et 15, **caractérisée en ce que** le troisième et le quatrième élément de commande (C, D) forment un sous-ensemble préassemblé, comportant les ensembles de disques (300, 400) du troisième et du quatrième élément de commande (C, D) et un plateau porte-disques extérieur commun au troisième et au quatrième élément de commande (C, D), sachant que un dispositif d'assistance (310) pour l'actionnement de l'ensemble de disques (300) du troisième élément de commande (C) et un dispositif d'assistance (410) pour l'actionnement de l'ensemble de disques (400) du quatrième élément de commande (D) sont intégré au moins partiellement dans ce plateau porte-disques extérieur commun.

17. Transmission automatique à plusieurs étages selon une des revendications 1 à 13, **caractérisée en ce que** le troisième élément de commande (C) est disposé axialement à côté du premier train épicycloïdal (RS1), à savoir au côté de celui-ci opposé au deuxième train épicycloïdal (RS2).

18. Transmission automatique à plusieurs étages selon une des revendications 1 à 17, **caractérisée en ce que** le premier élément de commande (A) est disposé sur le côté du troisième train épicycloïdal (RS3) opposé au deuxième train épicycloïdal (RS2).

19. Transmission automatique à plusieurs étages selon la revendication 18, **caractérisée en ce que** le premier élément de commande (A) est adjacent axialement au troisième train épicycloïdal (RS3).

20. Transmission automatique à plusieurs étages selon une des revendications 1 à 19, **caractérisée en ce que** le premier élément de commande (A) est adjacent à une paroi extérieure du carter de boîte (GG) ou à un couvercle du carter de boîte, celui-ci étant lié solidaire en rotation avec le carter de boîte (GG) et formant une paroi extérieure de la transmission automatique.

21. Transmission automatique à plusieurs étages selon une des revendications 1 à 17, **caractérisée en ce que**, vu dans le sens axial, le premier élément de commande (A) est disposé radialement dans une zone au-dessus des trains épicycloïdaux (RS1, RS2, RS3), en particulier, vu dans le sens axial, dans une zone radiale au-dessus du troisième train épicycloïdal (RS3).

22. Transmission automatique à plusieurs étages selon la revendication 21, **caractérisée en ce que** le premier et le quatrième élément de commande (A, D) sont juxtaposés axialement, sachant que en particulier les ensembles de disques (100, 400) du premier et du quatrième élément de commande (A, D) sont disposés sur un diamètre au moins similaire.

23. Transmission automatique à plusieurs étages selon la revendication 21 ou 22, **caractérisée en ce que** le premier et le quatrième élément de commande (A, D) forment un sous-ensemble préassemblé, comportant les ensembles de disques (100, 400) du premier et du quatrième élément de commande (A, D) et un plateau porte-disques extérieur commun au premier et au quatrième élément de commande (A, D), sachant que un dispositif d'assistance (110) pour l'actionnement de l'ensemble de disques (100) du premier élément de commande (A) et un dispositif d'assistance (410) pour l'actionnement de l'ensemble de disques (400) du quatrième élément de commande (D) sont intégrés au moins partiellement dans ce plateau porte-disques extérieur commun.

24. Transmission automatique à plusieurs étages selon une des revendications 1 à 23, **caractérisée en ce que** l'arbre d'entrée (AN) et l'arbre de sortie (AB) ne sont pas disposés coaxialement l'un par rapport à l'autre, et **en ce que**, en particulier, l'arbre d'entrée (AN) et l'arbre de sortie (AB) sont disposés dans un plan parallèle à l'axe ou angulairement entre eux.

25. Transmission automatique à plusieurs étages selon une des revendications 1 à 24, **caractérisée en ce que** est prévu un étage à pignons cylindriques (STST) ou un entraînement par chaîne, par l'intermédiaire duquel la couronne (HO1) du premier train épicycloïdal (RS1) et la nervure (ST3, ST2) du troisième ou du deuxième train épicycloïdal (RS3, RS2), connectée avec cette couronne (HO1), est liée activement à l'arbre de sortie (AB), sachant que un premier pignon cylindrique (STR1) de l'étage à pignons cylindriques (STST) ou un premier pignon à chaîne de l'entraînement par chaîne est disposé axialement entre le troisième train épicycloïdal (RS3) et le premier élément de commande (A).

26. Transmission automatique à plusieurs étages selon une des revendications 1 à 24, **caractérisée en ce que** est prévu un étage à pignons cylindriques (STST) ou un entraînement par chaîne, par l'intermédiaire duquel la couronne (HO1) du premier train épicycloïdal (RS1) et la nervure (ST3, ST2) du troisième ou du deuxième train épicycloïdal (RS3, RS2), connectée avec cette couronne (HO1), est liée activement à l'arbre de sortie (AB), sachant que un premier pignon cylindrique (STR1) de l'étage à pignons cylindriques (STST) ou un premier pignon à chaîne de l'entraînement par chaîne est adjacent à une paroi extérieure du carter de boîte (GG) ou à un couvercle du carter fixé au carter de boîte.

27. Transmission automatique à plusieurs étages selon la revendication 26, **caractérisée en ce que** le premier élément de commande (A) est disposé entre le troisième train épicycloïdal (RS3) et le premier pignon cylindrique (STR1) de l'étage à pignons cylindriques (STST) ou entre le troisième train épicycloïdal (RS3) et le premier pignon à chaîne de l'entraînement par chaîne.

28. Transmission automatique à plusieurs étages selon la revendication 26, **caractérisée en ce que** le premier élément de commande (A) est disposé à l'intérieur d'une chambre de cylindre, celle-ci étant formée par le premier pignon à chaîne de l'entraînement par chaîne, sachant que le premier élément de commande (A) est adjacent axialement au troisième train épicycloïdal (RS3).

29. Transmission automatique à plusieurs étages selon une des revendications 1 à 23, **caractérisée en ce que** l'arbre d'entrée (AN) et l'arbre de sortie (AB) sont disposés coaxialement l'un par rapport à l'autre.

30. Transmission automatique à plusieurs étages selon la revendication 29, **caractérisée en ce que** l'arbre de sortie (AB) lié activement à la couronne (H01) du premier train épicycloïdal (RS1) pénètre centriquement dans le sens axial le troisième train épicycloïdal (RS3).

31. Transmission automatique à plusieurs étages selon les revendications 29 ou 30, **caractérisée en ce que** l'arbre de sortie (AB) lié activement à la couronne (H01) du premier train épicycloïdal (RS1) pénètre centriquement dans le sens axial une chambre d'embrayage du premier élément de commande (A), celle-ci étant, en particulier, formée par un plateau porte-disques et/ou le dispositif d'assistance (110) du premier élément de commande (A).

32. Transmission automatique à plusieurs étages selon une des revendications 1 à 31, **caractérisée en ce que** la fermeture sélective des éléments de commande (A à E) permet d'engager au moins six vitesses de marche avant de telle manière que, pour le passage à partir d'un rapport engagé au rapport immédiatement supérieur ou au rapport immédiatement inférieur, des éléments de commande qui viennent d'être sélectionnés, à chaque fois, n'est ouvert qu'un seul élément de commande et fermé un autre élément de commande, sachant que dans la première vitesse de marche avant sont fermés le premier et le quatrième élément de commande (A, D), dans la deuxième vitesse de marche avant sont fermés le premier et le troisième élément de commande (A, C), dans la troisième vitesse de marche avant sont fermés le premier et le deuxième élément de commande (A, B), dans la quatrième vitesse de marche avant sont fermés le premier et le cinquième élément de commande (A, E), dans la cinquième vitesse de marche avant sont fermés le deuxième et le cinquième élément de commande (B, E), dans la sixième vitesse de marche avant sont fermés le troisième et le cinquième élément de commande (C, E) et dans une marche arrière sont fermés le deuxième et le quatrième élément de commande (B, D).
